# EUROPEAN PATENT SPECIFICATION

(11) **EP 4 300 983 B1**
(45) Date of publication and mention of the grant of the patent: **31.12.2025**
(21) Application number: 21932238.5
(22) Date of filing: 26.03.2021
(51) Int. Cl.: H04L 65/611, H04L 65/80, H04N 21/6405, H04W 4/06, H04W 28/02, H04W 28/12

(54) **MEDIA DATA TRANSMISSION METHOD AND COMMUNICATION APPARATUS**
MEDIENDATENÜBERTRAGUNGSVERFAHREN UND KOMMUNIKATIONSVORRICHTUNG
PROCÉDÉ DE TRANSMISSION DE DONNÉES MULTIMÉDIA ET APPAREIL DE COMMUNICATION

(43) Date of publication of application: 03.01.2024
(73) Proprietor: Huawei Technologies Co., Ltd., Shenzhen, Guangdong 518129 (CN)
(72) Inventor: PAN, Qi, Shenzhen, Guangdong 518129 (CN); HUANG, Zhenglei, Shenzhen, Guangdong 518129 (CN); NI, Hui, Shenzhen, Guangdong 518129 (CN); LI, Yongcui, Shenzhen, Guangdong 518129 (CN); WANG, Yaxin, Shenzhen, Guangdong 518129 (CN)
(74) Representative: Gill Jennings & Every LLP
(86) International application number: PCT/CN2021/083147
(87) International publication number: WO 2022/198613

(56) References cited:
- EP-A1- 3 723 395
- CN-A- 1 728 677
- CN-A- 101 330 436
- CN-A- 101 399 684
- CN-A- 101 521 583
- CN-A- 101 599 843
- CN-A- 102 006 221
- CN-A- 103 546 826
- CN-B- 101 399 684
- KR-A- 20020 015 586

## Description

### TECHNICAL FIELD

This application relates to the field of wireless communication technologies, and in particular, to a media data transmission method and a communication apparatus.

### BACKGROUND

With development of wireless transmission, wireless media data transmission has penetrated people's life, such as live competitions, live e-commerce, short video shooting, surveillance, and the like. With rapid development of media industry, emerging media services, such as an ultra-high-definition video, and a VR panoramic video, bring a sharp increase in media data volume. This raises higher requirement on network transmission performance accordingly. For media services, there may be a specific similarity between media content (such as live content) watched by a plurality of users at the same time. To facilitate media data transmission, avoid a waste of network resources, and reduce network transmission burden, the media services are usually delivered to user terminals in a multicast communication mode during network transmission. Multicast communication is one of communication modes in a communication network. This communication mode is a pointto-many (single-transmission and multi-receiving) communication mode. An implementation principle of the multicast communication is: A host serving as a media information source sends media data to a plurality of user terminals being accessing a same media service.

After determining a set of user terminal devices being accessing a target service, a base station determines, by using a user terminal with worst quality for receiving signals in the set of user terminal devices as a reference, a data transmission parameter for transmitting media data corresponding to the target service, to ensure network connection performance and data transmission performance of all user terminals in the set of user terminal devices. However, in this manner, a data transmission speed of the target service is reduced, and a data throughput in an entire-cell multicast range is further reduced.

Chinese patent publication CN 101399684 B provides a hierarchical multicasting method including the steps of: a start request of the multimedia broadcasting/multicasting service initialized by network side is received; service information of sub-streams in different layers is obtained and resources for data of the sub-streams in different layers is distributed according to the start request, when the service is transmitted in a hierarchical transmission mode, and response message for the network side is returned; the sub-stream data transmitted by the network side is received after the network side receives the response message, and the sub-stream data is transmitted out after synchronous treatment.

European patent application EP 3723395 A1 provides a communication method including the steps of: sending, by an access network device, indication information to user equipment, where the indication information is used to indicate a manner of receiving multicast service data, and the receiving manner includes a unicast manner and/or a multicast manner; and sending, by the access network device, the multicast service data in the unicast manner and/or the multicast manner indicated by the indication information.

### SUMMARY

The invention is defined by the subject-matter of the independent claims. Further details are defined in the dependent claims.

This application provides a media data transmission method and a communication apparatus. Multicast grouping may be performed on a plurality of terminal devices that access a same service, and further differentiated transmission is performed on media data of the same service. This improves a data transmission speed of the access network device for the service, and improves a data throughput in a signal coverage area of the access network device.

According to a first aspect, an embodiment of this application provides a media data transmission method in accordance with claim 1 of the appended claims.

By using the foregoing method, the access network device groups, based on the layered coding information of the media flow of the target service, the UEs that access the target service to obtain the plurality of multicast groups, so that network connection performance (or data transmission performance) among different multicast groups changes by step. Further, the access network device may differentially transmit the target service to the multicast groups by using a multicast communication technology. For example, for a multicast group with good network connection performance (or better data transmission performance), a transmission speed of the media flow for transmitting the target service can be improved, while for a multicast group with poor network connection performance (or worse data transmission performance), a transmission speed of the media flow for transmitting the target service can be reduced. This improves a data transmission speed of the access network device for the target service, and increases a data throughput in a signal coverage area of the access network device.

In a possible implementation, the layered coding information includes one or more of the following information: first indication information, a quantity of media flow layers in the media flow, a layer identifier of a media flow layer in the media flow, or a network requirement of a media flow layer in the media flow. The first indication information indicates that the media flow is a layered media flow.

In a possible implementation, the access network device receives second indication information from a session management function SMF network element, where the second indication information indicates the access network device to determine the plurality of multicast groups. By implementing this possible implementation, only after receiving the second indication information sent by the SMF network element, the access network device triggers operation of performing packet transmission on the UE that accesses the target service.

In a possible implementation, the access network device receives third indication information from the SMF network element, where the third indication information indicates a correspondence between a media flow layer and a quality of service QoS flow; and the access network device sends, to the UE, a media data packet in the QoS flow corresponding to a first media flow layer, where the first media flow layer is a media flow layer corresponding to a multicast group to which the UE belongs. Alternatively, the access network device receives third indication information from the SMF network element, where the third indication information indicates a correspondence between a media flow layer and a protocol data unit PDU session; and the access network device sends, to the UE, a media data packet in a PDU session corresponding to a first media flow layer, and the first media flow layer is a media flow layer corresponding to a multicast group to which the UE belongs.

By implementing this possible implementation, the access network device may send, to the UE based on the correspondence between the media flow layer and the QoS flow or the correspondence between the media flow layer and the PDU session, the media data packet of the first media layer of the QoS flow corresponding to the multicast group to which the UE belongs, to implement differentiated multicast transmission of media data fora same service.

By implementing the first aspect, when dividing the UE that access the target service into the plurality of multicast groups, the access network device determines data transmission parameters (that is related to a data transmission speed of the multicast groups) of each multicast group or media flow layers corresponding to each multicast group (that is related to network transmission performance of each multicast group). This implements differentiated configuration for each multicast group, and improves an overall transmission speed and a data throughput for the target service.

In a possible implementation, the access network device sends, to the UE, the multicast group identifier of the multicast group to which the UE belongs; the access network device sends, to the UE, based on the layer identifier of the media flow layer corresponding to the multicast group to which the UE belongs, a media data packet corresponding to the layer identifier of the media flow layer; and a media data packet of the target service carries the layer identifier of the media flow layer corresponding to the multicast group.

By implementing the possible implementation, the access network device may determine, based on a layer identifier carried in the media data packet, a media flow layer corresponding to the media data packet, and implements differentiated multicast transmission of media data for a same service based on a correspondence between the multicast group and the media flow layer.

By implementing the first aspect, the UE may determine the second multicast group from the plurality of multicast groups in real time based on a change of the received signal strength of the UE (in other words, it may be understood as a multicast group matching the received signal strength of the UE), and sends, to the access network device, a multicast group switching request that carries a second multicast group identifier. In this way, the multicast group may be switched under an indication of the access network device, to optimize data transmission performance of the UE for the media data of the target service. In addition, the UE sends the multicast group switching request to the access network device only when a change duration of the received signal strength of the UE is greater than the time value, to avoid a case in which a network of the UE deteriorates because the UE frequently switches the multicast group.

In a possible implementation, the determining a plurality of multicast groups includes: The received signal strength range of the UE in each of the plurality of multicast groups is determined; the access network device determines, a target UE of a first multicast group based on a received signal strength and a time value of a first UE, and a received signal strength range of UE in the multicast group corresponding to the first UE, where the first UE is one of UEs that access the target service, a first duration of the target UE is greater than or equal to the time value, and the first duration is a duration in which a received signal strength is greater than a received signal strength range of a UE in a second multicast group; the access network device determines the second multicast group from the plurality of multicast groups based on the received signal strength of the target UE and the received signal strength range of the UE in each multicast group; and the access network device sends fourth indication information to the target UE, where the fourth indication information carries the group identifier of the second multicast group, and the third indication information indicates the target UE to leave the second multicast group from the first multicast group.

In a possible implementation, the determining a plurality of multicast groups includes: The access network device determines the received signal strength range of the UE in each of the plurality of multicast groups; the access network device determines, a target UE of a first multicast group based on a received signal strength and a time value of a first UE, and a received signal strength range of UE in the multicast group corresponding to the first UE, where the first UE is one of UEs that access the target service, a first duration of the target UE is greater than or equal to the time value, and the first duration is a duration in which a received signal strength reaches a received signal strength range of a UE in a second multicast group; the access network device determines the second multicast group from the plurality of multicast groups based on the received signal strength of the target UE and the received signal strength range of the UE in each multicast group; and the access network device sends fourth indication information to the target UE, where the fourth indication information carries the group identifier of the second multicast group, and the third indication information indicates the target UE to join the second multicast group from the first multicast group.

By implementing this possible implementation, after the access network device perceives that the change duration of the received signal strength of the UE is greater than the time value, the access network device may indicate the UE to perform the multicast group switching, and the access network device does not need to perform an indication based on the multicast group switching request sent by the UE, to save communication transmission resources.

In a possible implementation, the access network device receives the time value from the SMF network element.

In a possible implementation, the determining a plurality of multicast groups includes: the access network device determines the identifier of the UE in each of the plurality of multicast groups, and the access network device sends the identifier of the UE in each multicast group to the SMF network element. By implementing this possible implementation, the SMF network element may perform traffic statistics collection/charging policy on the UE based on the multicast group to which the UE belongs.

In a possible implementation, the access network device sends a quantity of multicast groups of the target service to an application server AS. By implementing this possible implementation, after receiving the quantity of multicast groups of the target service, the AS may adjust layered coding of the media flow accordingly based on the quantity of multicast groups of the target service. In this way, the layered coding information of the media flow is used for each multicast group.

According to a further aspect, this application provides a communication apparatus. The communication apparatus includes a processor. When the processor invokes a computer program in a memory, the method performed by the access network device in the method according to the first aspect is performed. Optionally, the communication apparatus further includes the memory, and the memory is configured to store the computer program. Optionally, the communication apparatus further includes a transceiver, and the transceiver is configured to receive a signal or send a signal. Optionally, the communication apparatus further includes an interface circuit. The interface circuit is configured to receive computer-executable instructions and transmit the computer-executable instructions to the processor.

According to a yet further aspect, an embodiment of this application provides a computer-readable storage medium. The computer storage medium stores computer-readable instructions. When a computer reads and executes the computer-readable instructions, the computer is enabled to perform the method in any possible design of the first aspect aspect.

These aspects or other aspects in this application are clearer and more intelligible in descriptions in the following embodiments.

### BRIEF DESCRIPTION OF DRAWINGS

FIG. 1 is a schematic diagram of a network architecture to which an embodiment of this application is applicable;
FIG. 2 is a schematic diagram of a QoS model in a 5G communication system;
FIG. 3 is a schematic diagram of a partial procedure in a PDU session establishment process;
FIG. 4 is an application scenario of a media data transmission method according to an embodiment of this application;
FIG. 5 is a schematic flowchart of a media data transmission method according to an embodiment of this application;
FIG. 6 is another application scenario of a media data transmission method according to an embodiment of this application;
FIG. 7 is a schematic flowchart of a sending manner of sending a media data packet of a target service according to an embodiment of this application;
FIG. 8 is a schematic flowchart of another sending manner of sending a media data packet of a target service according to an embodiment of this application;
FIG. 9 is a schematic flowchart of still another sending manner of sending a media data packet of a target service according to an embodiment of this application;
FIG. 10 is a schematic flowchart of another media data transmission method according to an embodiment of this application;
FIG. 11 is a schematic diagram of received signal strengths of UEs in multicast groups according to an embodiment of this application;
FIG. 12 is a schematic flowchart of still another media data transmission method according to an embodiment of this application;
FIG. 13 is a schematic flowchart of yet another media data transmission method according to an embodiment of this application;
FIG. 14 is a schematic diagram of still another scenario of a media data transmission method according to an embodiment of this application;
FIG. 15 is a schematic diagram of a structure of a communication apparatus according to an embodiment of this application;
FIG. 16 is a schematic diagram of a structure of a communication apparatus according to an embodiment of this application; and
FIG. 17 is a schematic diagram of a structure of an access network device according to an embodiment of this application.

### DESCRIPTION OF EMBODIMENTS

To make the objectives, technical solutions, and advantages of this application clearer, the following further describes this application in detail with reference to the accompanying drawings.

In the specification, claims, and accompanying drawings of this application, terms "first", "second", and the like are intended to distinguish between different objects but do not indicate a particular order. In addition, terms "including" and "having" and any other variants thereof are intended to cover a non-exclusive inclusion. For example, a process, a method, a system, a product, or a device that includes a series of operations or units is not limited to the listed operations or units, but optionally further includes an unlisted operation or unit, or optionally further includes another inherent operation or unit of the process, the method, the product, or the device.

An "embodiment" mentioned in this specification means that a specific feature, structure, or characteristic described with reference to embodiments may be included in at least one embodiment of this application. The phrase appearing in various locations in this specification does not necessarily mean a same embodiment, and does not mean an independent or optional embodiment exclusive from another embodiment. It is explicitly and implicitly understood by persons skilled in the art that embodiments described in this specification may be combined with another embodiment.

In this application, "at least one (item)" means one or more, "a plurality of" means two or more, "at least two (items)" means two, three, or more, and "and/or" is used to describe a correspondence relationship between corresponding objects, and indicates that there may be three relationships. For example, "A and/or B" may indicate that only A exists, only B exists, and both A and B exist, where A and B may be singular or plural. The character "/" generally indicates an "or" relationship between the associated objects. "At least one of the following items (pieces)" or a similar expression thereof refers to any combination of these items, including any combination of singular items (pieces) or plural items (pieces). For example, at least one (piece) of a, b, or c may indicate a, b, c, "a and b", "a and c", "b and c", or "a, b, and c", where a, b, and c may be singular or plural.

The following clearly describes the technical solutions in embodiments of this application with reference to the accompanying drawings in embodiments of this application.

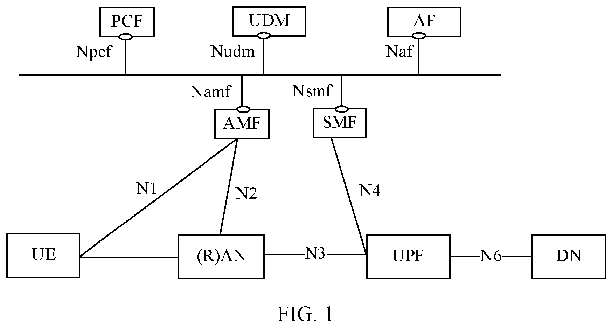

FIG. 1 is a schematic diagram of a network architecture to which an embodiment of this application is applicable. As shown in FIG. 1, a terminal device may access a wireless network, to obtain a service of an external network (for example, a data network (data network, DN)) through the wireless network, or communicate with another device through the wireless network, for example, may communicate with another terminal device. The wireless network includes a (radio) access network ((radio) access network, (R) AN) and a core network (core network, CN). The (R) AN (hereinafter described as a RAN) is configured to connect the terminal device to the wireless network, and the CN is configured to manage the terminal device and provide a gateway for communicating with the DN.

The following separately describes in detail the terminal device, the RAN, the CN, and the DN in FIG. 1.

### 1. Terminal device

The terminal device includes a device providing a user with voice and/or data connectivity, for example, may include a handheld device having a wireless connection function, or a processing device connected to a wireless modem. The terminal device may communicate with a core network through a radio access network. The terminal device may be a user equipment (user equipment, UE), a wireless terminal device, a mobile terminal device, a device-to-device (device-to-device, D2D) communication terminal device, a vehicle-to-everything (vehicle-to-everything, V2X) terminal device, a machine-to-machine/machine-type communication (machine-to-machine/machine-type communication, M2M/MTC) terminal device, an internet of things (internet of things, IoT) terminal device, a subscriber unit, a subscriber station, a mobile station, a remote station, an access point (access point, AP), a remote terminal, an access terminal, a user terminal, a user agent, user equipment, or the like. For example, the terminal device may include a mobile phone (or referred to as a "cellular" phone), a computer having a mobile terminal device, or a portable, pocket-sized, handheld, or computer built-in mobile apparatus, or the like. For example, the terminal device may include a device such as a personal communication service (personal communication service, PCS) phone, a cordless phone, a session initiation protocol (session initiation protocol, SIP) phone, a wireless local loop (wireless local loop, WLL) station, a personal digital assistant (personal digital assistant, PDA), or the like. The terminal device may further include a limited device, such as a device having low power consumption, a device having a limited storage capability, a device having a limited computing capability, or the like. In this application, UE refers to the terminal device in the following descriptions.

### 2. RAN

The RAN may include one or more RAN devices (or access network devices), and an interface between the access network device and a terminal device may be a Uu interface (or referred to as an air interface). Certainly, in future communication, names of these interfaces may remain unchanged, or may be replaced with other names. This is not limited in this application.

The access network device is a node or a device that enables the terminal device to access a wireless network. The access network device includes, for example, but is not limited to, a new generation NodeB (generation NodeB, gNB) in a 5G communication system, an evolved NodeB (evolved NodeB, eNB), a next generation evolved NodeB (next generation eNB, ng-eNB), a wireless backhaul device, a radio network controller (radio network controller, RNC), a NodeB (NodeB, NB), a base station controller (base station controller, BSC), a base transceiver station (base transceiver station, BTS), a home base station ((home evolved NodeB, HeNB) or (home NodeB, HNB)), a baseband unit (baseband unit, BBU), a transmitting and receiving point (transmitting and receiving point, TRP), a transmitting point (transmitting point, TP), a mobile switching center, and the like.

### 3. CN

The CN may include one or more CN devices. A 5G communication system is used as an example. The CN may include an access and mobility management function (access and mobility management function, AMF) network element, a session management function (session management function, SMF) network element, a user plane function (user plane function, UPF) network element, a policy control function (policy control function, PCF) network element, a unified data management (unified data management, UDM) network element, an application function (application function, AF) network element, and the like.

The AMF network element is a control plane network element provided by an operator network, and is responsible for access control and mobility management for accessing the operator network by the terminal device, for example, including mobility status management, allocation of a temporary user identity, user authentication and authorization, and the like.

The SMF network element is a control plane network element provided by the operator network, and is responsible for managing a protocol data unit (protocol data unit, PDU) session of the terminal device. The PDU session is a channel for transmitting a PDU, and the terminal device needs to transmit the PDU to a DN through the PDU session. The SMF network element is responsible for establishment, maintenance, deletion, and the like of the PDU session. The SMF network element includes functions related to a session, for example, session management (for example, session establishment, modification, and release, including tunnel maintenance between a UPF and a RAN), selection and control of the UPF network element, service and session continuity (service and session continuity, SSC) mode selection, roaming, and the like.

The UPF network element is a gateway provided by an operator, and is a gateway for communication between the operator network and the DN. The UPF network element includes userplane related functions, for example, data packet routing and transmission, packet detection, quality of service (quality of service, QoS) handling, lawful interception, uplink packet detection, downlink data packet buffering, and the like.

The PCF network element is a control plane function provided by the operator, and is configured to provide a policy of the PDU session for the SMF network element. The policy may include a charging-related policy, a QoS-related policy, an authorization-related policy, and the like.

The AF network element is a function network element that provides various capability exposure services, and provides an interface for an external third-party server to interact with a core network. The AF network element can interact with the core network through the AF, including interacting with a policy management framework for policy management.

In addition, although not shown, the CN may further include other possible network elements, for example, a network exposure function (network exposure function, NEF) network element, a unified data repository (unified data repository, UDR) network element, and a network data analytics function (network data analytics function, NWDAF) network element.

It should be noted that in embodiments of this application, the access network device and the PCF network element may be collectively referred to as a network device.

### 4. DN

The DN, also referred to as a packet data network (packet data network, PDN), is a network outside an operator network. The operator network may access a plurality of DNs. Application servers corresponding to a plurality of services may be deployed in the DN, to provide a plurality of possible services for a terminal device.

In FIG. 1, Npcf, Nudm, Naf, Namf, Nsmf, N1, N2, N3, N4, and N6 are interface sequence numbers. For meanings of these interface sequence numbers, refer to meanings defined in related standard protocols. This is not limited herein.

It may be understood that the 5G communication system is used as an example for illustration in FIG. 1. The solutions in embodiments of this application are applicable to another possible communication system, for example, an LTE communication system or a future 6th generation (the 6th generation, 6G) communication system. The foregoing network elements or functions may be network elements in a hardware device, or may be software functions run on dedicated hardware, or may be instantiated virtualization functions on a platform (for example, a cloud platform). Optionally, the foregoing network elements or functions may be implemented by one device, may be implemented by a plurality of devices, or may be a functional module in one device. This is not specifically limited in embodiments of this application.

The following first describes related technical features in embodiments of this application. It should be noted that the explanations are intended to facilitate understanding of embodiments of this application, but should not be considered as a limitation on the protection scope claimed in this application.

### 1. PDU session and QoS flow

In the network architecture shown in FIG. 1, data transmission may be performed between the terminal device and the UPF network element through a PDU session. A plurality of data flows with different QoS requirements may be transmitted in each PDU session, and are referred to as QoS flows.

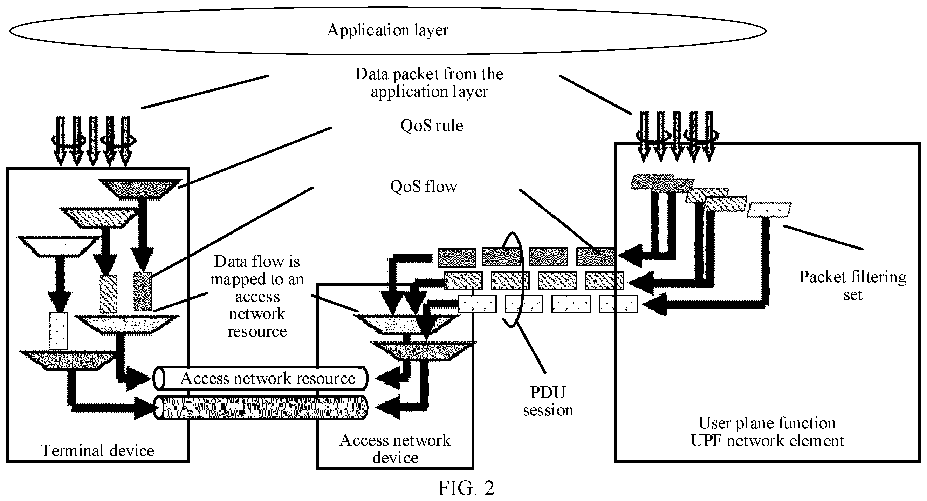

FIG. 2 is a schematic diagram of a QoS model in a 5G communication system. As shown in FIG. 2, in a downlink direction, after data packets from an application layer arrive at the UPF network element, the UPF network element distinguishes the downlink data packets into different QoS flows based on packet filter sets (packet filter sets) in a packet detection rule (packet detection rule, PDR) configured by the SMF network element. A data packet in a QoS flow is marked with a QoS flow identifier (QoS flow identifier, QFI). Then, the UPF network element transfers the data packet to the access network device through an N3 interface. After receiving the data packet, the access network device determines, based on the QFI corresponding to the data packet, the QoS flow to which the data belongs, and then sends, based on a QoS parameter of the QoS flow, the downlink data packet to the terminal device on a radio bearer (Bearer) corresponding to an air interface over an access network resource. In an uplink direction, after obtaining data packets, an application layer of the terminal device may distinguish the uplink data packets into different QoS flows based on the packet filter sets in the QoS rule configured by the SMF network element, and then sends the uplink data packet to the access network device on the bearer (Bearer) corresponding to the air interface over the access network resource. For example, in embodiments of this application, related implementation in the downlink direction is studied.

It may be understood that before data transmission is performed by using the QoS model, the PDU session between the terminal device and the UPF network element is first established through a PDU session establishment process.

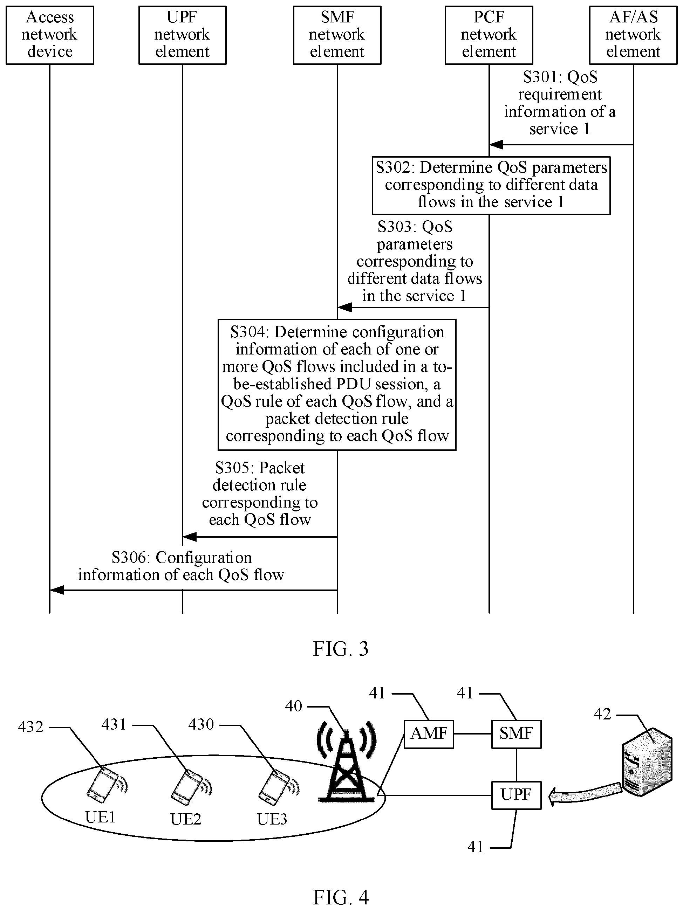

FIG. 3 is a schematic diagram of a partial procedure in the PDU session establishment process. Refer to FIG. 3. The procedure may include the following steps.

S301: An application server (application server, AS) sends QoS requirement information of a service (for example, a service 1) to the PCF network element via the AF network element. Specifically, the AF network element may interact with the PCF network element via the NEF network element, or the AF network element directly interacts with the PCF network element.

Herein, the service 1 may be a VR service, an AR service, a high-definition video service, a tactile internet service, or the like. This is not specifically limited. The service 1 may include a plurality of data flows, for example, a video data flow, an audio data flow, or a plurality of coding layer data flows of a video. Different data flows may have different QoS requirement information.

S302: The PCF network element receives the QoS requirement information of the service 1, and determines, based on the QoS requirement information of the service 1, QoS parameters respectively corresponding to different data flows in the service 1.

S303: The PCF network element sends, to an SMF network element, the QoS parameters corresponding to the different data flows in the service 1.

Specifically, the PCF network element may send the QoS parameters to the SMF network element via a PCC rule or PDU session policy information.

Herein, for example, when having a receiving requirement of the service 1, the terminal device may initiate the PDU session establishment process. Then after receiving a PDU session establishment request from the terminal device, the SMF network element may send a request message to the PCF network element, where the request message is used to obtain the QoS parameters corresponding to the different data flows in the service 1. Finally, the PCF network element may send the QoS parameters corresponding to the different data flows in the service 1 to the SMF network element.

S304: The SMF network element determines configuration information of each one or more QoS flows included in the to-be-established PDU session, a QoS rule of each QoS flow and a packet detection rule corresponding to each QoS flow.

The configuration information of each QoS flow may include a QoS parameter corresponding to each QoS flow. For example, the one or more QoS flows include a first QoS flow, and the first QoS flow is used to bear a video data flow in the service 1. In this case, a QoS parameter corresponding to the first QoS flow is a QoS parameter corresponding to the video data flow.

S305: The SMF network element sends, to the UPF network element, packet detection rule corresponding to each QoS flow in the one or more QoS flows established in the PDU session. In this way, after receiving data packets from the application server, the UPF network element can distinguish the data packets into different QoS flows based on the packet detection rule corresponding to each QoS flow.

S306: The SMF network element sends a PDU session resource establishment request message to the access network device via the AMF network element. The PDU session resource establishment request message includes configuration information of each QoS flow in one or more QoS flows that need to be established in the PDU session. In this way, the access network device may transmit the uplink/downlink data packet over the air interface based on the QoS parameter that corresponds to each QoS flow and that is included in the configuration information of each QoS flow.

### 2. QoS parameter

QoS flows may include a guaranteed bit rate (guaranteed bit rate, GBR) QoS flow and a non-guaranteed bit rate (non-guaranteed bit rate, Non-GBR) QoS flow. A service carried by the GBR QoS flow, such as a session video service, has a strict requirement on a delay or a rate, and needs transmission rate assurance of the flow. A service carried by the Non-GBR QoS flow, such as a web browsing and file downloading service, has a low requirement on a rate, and needs no real-time rate assurance.

The GBR QoS flow is used as an example. Each GBR QoS flow may correspond to a group of QoS parameters. The group of QoS parameters may include a 5G quality of service identifier (5G QoS identifier, 5QI), a guaranteed flow bit rate (guaranteed flow bit rate, GFBR), and a maximum flow bit rate (maximum flow bit rate, MFBR).

The GFBR represents a bit rate guaranteed by a network to be provided to the QoS flow in an average window, and the MFBR is used to limit a bit rate to a highest bit rate expected by the QoS flow (for example, a data packet may be dropped by the UE/RAN/UPF when the MFBR is exceeded). Values of the GFBR may be the same in uplink (uplink, UL) and downlink (downlink, DL), and values of the MFBR may also be the same in UL and DL.

The 5QI is a scalar for indexing to a corresponding 5G QoS feature. A 5QI is classified as a standardized 5QI, a pre-configured 5QI, and a dynamically allocated 5QI. The standardized 5QI is in a one-to-one correspondence with a group of standardized 5G QoS features. A 5G QoS feature value corresponding to the pre-configured 5QI may be pre-configured on the access network device. A 5G QoS feature corresponding to the dynamically allocated 5QI is sent by the PCF network element to the access network device.

The standardized 5QI is used as an example. The 5G QoS features corresponding to the standardized 5QI may include the following features.
(1) A resource type (resource type) includes a GBR, a delay critical (delay critical) GBR, and a non-GBR. A non-GBR QoS flow may use a non-GBR resource type. A GBR QoS flow may use a GBR resource type or a delay critical GBR resource type.
(2) A priority level (priority level) represents a resource scheduling priority between 5G QoS flows. The parameter is used to distinguish between QoS flows of one terminal device, or may be used to distinguish between QoS flows of different terminal devices. A smaller parameter value indicates a higher priority.
(3) A packet delay budget (packet delay budget, PDB) defines a delay upper limit for data packet transmission between the terminal device and the anchor UPF network element.
(4) A packet error rate (packet error rate, PER) defines an upper limit, namely, an upper limit of a rate at which a data packet is processed by a link layer (such as an RLC layer) of a transmitting end but is not submitted to an upper layer (such as a PDCP layer) by a corresponding receiving end. The packet error rate may also be referred to as a packet error ratio, and both may replace each other. It should be noted that, for the GBR QoS flow that uses the delay critical GBR resource type, if a data burst volume sent in a PDB periodicity is less than a default maximum data burst volume and the QoS flow does not exceed the guaranteed flow bit rate, a data packet whose delay is greater than the PDB is denoted as a loss.
(5) The average window is defined for the GBR QoS flow and is used by a related network element to collect statistics on the GFBR and MFBR.
(6) A maximum data burst volume (maximum data burst volume, MDBV) represents a maximum data volume that needs to be served by a 5G access network in a PDB periodicity of the 5G access network, and each QoS flow whose resource type is the delay critical GBR should be associated with one MDBV.

For example, when a standardized 5QI is 82, a resource type corresponding to the standardized 5QI is the delay critical GBR, a priority level is 19, a PDB is 10 ms, a PER is 10⁻⁴, an MDBV is 255 bytes (byte), and an average window is 2000 ms.

### 3. Video coding

A video may include continuous images (images, photos, or the like) played continuously. When 24 images are played quickly per second, the human eye considers that the images are continuous images (namely, a video). A frame rate indicates a quantity of images played per second. For example, 24 frames mean that 24 images are played per second, 60 frames mean that 60 images are played per second, and so on. A video frame may be understood as an image (to be specific, one video frame may include a plurality of data packets corresponding to one image). When a frame rate is 60 frames, duration of one video frame is 1000 ms/60 Hz, which is about 16 ms.

Video coding is to convert a video file from one format to another format, to compress the video file and facilitate storage and transmission of the video file. There may be a plurality of video coding manners, for example, a layered coding scheme (or referred to as a layered coding scheme) and a non-layered coding scheme (or referred to as a layered coding scheme).

The layered coding scheme (or referred to as the layered coding scheme) may be layered coding based on time domain, may be layered coding based on space, may be layered coding based on quality, or may be layered coding based on any combination of time domain, space, and quality. This is not specifically limited. In an example, a video flow coded in the layered coding scheme (or referred to as the layered coding scheme) may include a basic layer bitstream and an enhancement layer bitstream, the basic layer bitstream and the enhancement layer bitstream each are sub-bitstream of the video flow, and the enhancement layer bitstream may include one or more layers. The basic layer bitstream may include a base layer data packet, and the base layer data packet is a necessary condition for video playback. Video image quality is poor in this case. The enhancement layer bitstream may include an enhancement layer data packet, and the enhancement layer data packet is a supplementary condition for video playback. For example, if the video image quality corresponding to the basic layer bitstream is smooth image quality, standard definition image quality may be achieved by superimposing a first enhancement layer bitstream on the basis of the basic layer bitstream, high definition image quality may be achieved by superimposing a second enhancement layer bitstream on the high definition image quality, and Blu-ray image quality may be achieved by superimposing a third enhancement layer bitstream on the basis of high definition image quality. In other words, a larger quantity of enhancement layer bitstreams superimposed on the basis of the basic layer bitstream indicates better image quality of a video obtained after decoding. It should be noted that the enhancement layer in embodiments of this application may include one layer or may include a plurality of layers.

There may be a plurality of specific implementations of the non-layered coding scheme (or referred to as the non-layered coding scheme). In an example, a video flow coded in the non-layered coding scheme (or referred to as the non-layered coding scheme) may include an I frame, a P frame, and a B frame. The I frame, also referred to as an intra coded frame, is an independent frame carrying all information. The I frame may be decoded independently without referring to other images, and may be simply understood as a static image. A first frame in a video sequence is always the I frame (where the I frame is a key frame). The P frame, also referred to as an inter- predictive coded frame, may be coded only by referring to a previous I frame. The P frame indicates a difference between a current frame and a previous frame (where the previous frame may be the I frame or the P frame). During decoding, a buffered image needs to be superimposed with the difference defined in the current frame to generate a final image. The B frame, also referred to as a bidirectional predictive coded frame, records differences between a current frame and a previous frame and a backward frame. In other words, to decode the B frame, not only a previous buffered image needs to be obtained, but also a decoded image needs to be obtained. The previous image and the backward image are superimposed with data of the current frame, to obtain a final image.

Based on the foregoing descriptions of related technical features, FIG. 4 is an application scenario of a media data transmission method according to this application. The application scenario includes an access network device 40, a core network device 41 (including an AMF network element, an SMF network element, and a UPF network element), an application server 42 that provides a media service, a terminal device 430, a terminal device 431, and a terminal device 432. The terminal device 430, the terminal device 431, and the terminal device 432 are terminal devices that access a target service. The terminal device 430, the terminal device 431, and the terminal device 432 are sorted from near to far based on a distance between the terminal device and the access network device 40. For ease of understanding, it may be considered that the distance between the terminal device and the access network device 40 affects signal quality of a signal received by the terminal device. In other words, it may be understood as that signal quality of the terminal device 430 is stronger than signal quality of the terminal device 431, and the signal quality of the terminal device 431 is stronger than signal quality of the terminal device 432. In this case, the application server 42 sends media data of the target service to the core network device 41, and the application server 42 codes the media data by using a layered coding technology to obtain a media flow of the target service (in other words, it may be understood as a basic layer bitstream and an enhancement layer bitstream of the target service). After the core network device 41 transmits the media flow of the target service to the access network device 40, to expand a signal coverage area, the access network device 40 enables a signal to cover all terminal devices (to be specific, enables the signal to cover the terminal device 430, the terminal device 431, and the terminal device 432). This reduces a packet loss rate in a network transmission process, and ensures data transmission performance of the terminal device 432 (in other words, a terminal device receiving a signal with poor quality). The access network device 40 reduces a transmission speed of transmitting the media flow of the target service to the terminal device 430 and the terminal device 431. In other words, a transmission speed and a data throughput of the coverage area of the access network device 40 are reduced.

Based on this, embodiments of this application provide a media data transmission method. Multicast group division is performed on a plurality of terminal devices that access a same service. Further, an access network device may perform, for different multicast groups, differentiated media data transmission for each UE that accesses a same service. In this way, a signal coverage area of the access network device is expanded, and a data transmission speed of the access network device and a data throughput of the access network device in the signal coverage area are improved.

The following describes in detail the data transmission method provided in embodiments of this application.

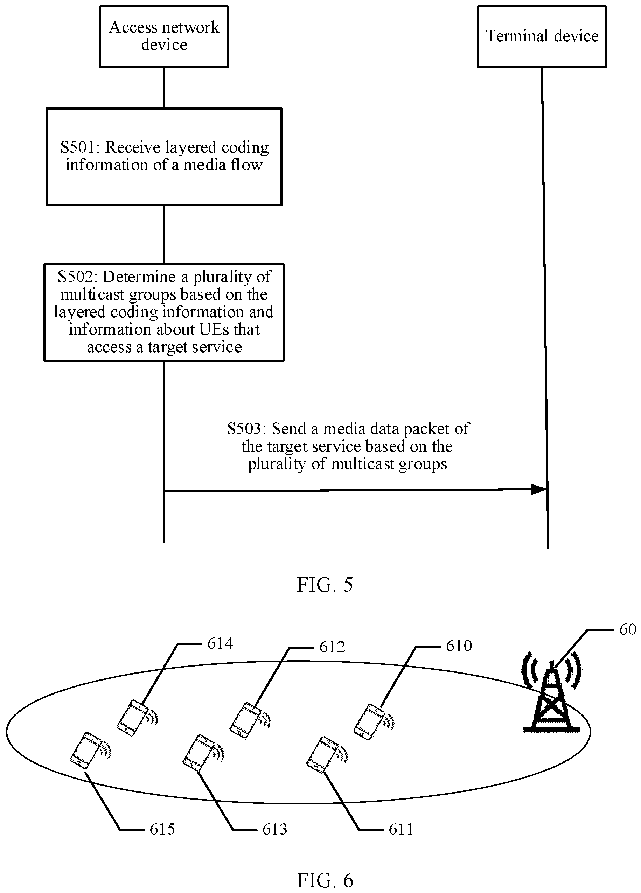

FIG. 5 is a schematic flowchart of a media data transmission method according to an embodiment of this application. As shown in FIG. 5, the data transmission method includes the following S501 to S503. The method shown in FIG. 5 may be performed by an access network device, or may be performed by a chip of an access network device. In FIG. 5, an example in which the access network device performs the method is used for description.

S501: An access network device receives layered coding information of a media flow, where the media flow is a target service.

The access network device receives the layered coding information of the media flow of the target service from a network element in a core network (or a core network device). For example, an SMF network element sends an N2 session management (session management, SM) message to the access network device, where the N2 SM message carries the layered coding information of the media flow corresponding to the target service. The N2 SM message is an SM message sent through an N2 interface (an interface between an AMF network element and the access network device).

It should be known that when a plurality of UEs are accessing a same service, the service may be understood as the target service in this application. For example, when a UE 1, a UE 2, a UE 3, and a UE 4 watch a video 1 by using live video software A, the video 1 is the target service. In this application, media data of the target service is referred to as a media flow, and the media flow of the target service is coded by using a layered coding technology to obtain a media flow layer. The media flow layer includes a basic layer bitstream and at least one enhancement layer bitstream. For example, the video 1 is considered as the target service. In this case, media data flows such as voice and an image in the video 1 are referred to as media flows belonging to the video 1 (or referred to as media flows of the video 1). Further, the media flow in the video 1 is coded by using the layered coding technology to obtain a basic layer bitstream, an enhancement layer 1 bitstream, and an enhancement layer 2 bitstream corresponding to the media flow. In other words, the media flow layer of the media flow includes: the basic layer bitstream, the enhancement layer 1 bitstream, and the enhancement layer 2 bitstream.

The layered coding information includes one or more of the following information: first indication information, a quantity of media flow layers in the media flow, a layer identifier of the media flow layer in the media flow, or a network requirement of the media flow layer in the media flow. For example, the first indication information indicates that the media flow is a layered media flow. In other words, if the access network device receives the first indication information of the media flow, it may be considered that the access network device learns the media flow obtains a plurality of media flow layers by coding the target service by using the layered coding technology. That the access network device receives the quantity of media flow layers may be understood as that the access network device learns a quantity of media flow layers (including a basic layer bitstream and an enhancement layer bitstream) obtained by coding the media flow by using the layered coding technology. That the access network device receives a layer identifier of each media flow layer may be understood as that the access network device not only learns the quantity of media flow layers, but also learns the layer identifier of each media flow layer. For example, a layer identifier of the basic layer bitstream is tag 1, a layer identifier of the enhancement layer 1 bitstream is tag 2, and a layer identifier of the enhancement layer 2 bitstream is tag 3. The layer identifier may be a user plane part protocol (which is specifically GTP-U, and unless otherwise specified, GTP represents a GTP-U layer) of the general packet radio service (general packet radio service, GPRS) tunneling protocol (GPRS Tunneling Protocol, GTP) of an N3 data packet. The access network device may determine, based on a layer identifier carried in a GTP layer of a data packet, a media data packet that is each media flow layer. The network requirement of the media flow layer may be understood as a network transmission requirement (for example, a network bandwidth or the like) of the media flow layer. For example, a network requirement of the basic layer bitstream is a network bandwidth of 20 Mbps, a network requirement of the enhancement layer 1 bitstream is network bandwidth of 10 Mbps, and a network requirement of the enhancement layer 2 bitstream is a network bandwidth of 20 Mbps.

S502: The access network device determines a plurality of multicast groups based on the layered coding information and information about terminal devices UEs that access the target service.

The information about the UE includes one or more of the following information: a distance between the UE and the access network device, a channel status (or referred to as channel state information) of the UE, or a received signal strength of the UE.

The access network device divides UEs into the plurality of multicast groups based on the layered coding information of the media flow and the information about the UE that access the target service. It should be understood that a multicast group may be understood as a terminal device group (or referred to as a user group). In other words, each multicast group includes some UEs in all UEs that access the target service. For example, terminal devices that access a service 1 includes: a UE 1, a UE 2, a UE 3, a UE 4, a UE 5, a UE 6, a UE 7, and a UE 8. In this case, the access network device divides, based on the layered coding information of the media flow and information about the UEs that access the service 1, terminal devices that access the service 1 into the three multicast groups: a multicast group 1, a multicast group 2, and a multicast group 3, where the UE 1, the UE 2, the UE 3, the UE 4, the UE 5, the UE 6, the UE 7, and the UE 8 correspond to the multicast group 1, and the UE 1, the UE 2, the UE 3, the UE 4, and the UE 5 correspond to the multicast group 2. The UE 6, the UE 7, and the UE 8 correspond to the multicast group 3.

For example, media flow layers of the service 1 include a basic layer bitstream, an enhancement layer 1 bitstream, and an enhancement layer 2 bitstream. Decoding of a data packet in the enhancement layer 1 bitstream depends on a data packet in the basic layer bitstream. Decoding of a data packet in the enhancement layer 2 bitstream depends on the data packet in the enhancement layer 1 bitstream and the data packet in the basic layer bitstream. FIG. 6 is an application scenario of a media data transmission method. The application scenario includes an access network device 60, a terminal device 610, a terminal device 611, a terminal device 612, a terminal device 613, a terminal device 614, and a terminal device 615 that access a service 1. If a received signal strength of the terminal device 610 is approximately the same as a received signal strength of the terminal device 611, a received signal strength of the terminal device 612 is approximately the same as a received signal strength of the terminal device 613, and a received signal strength of the terminal device 614 is approximately the same as a received signal strength of the terminal device 615. In addition, the received signal of the terminal device 610 and the received signal of the terminal device 611 are strongest, the received signals of the terminal device 612 and the received signal of the terminal device 613 are second, and the received signals of the terminal device 614 and the received signal of the terminal device 615 are worst. In this case, the access network device may divide the terminal devices that access the service 1 into three multicast groups. Specific information about each multicast group is shown in Table 1. A multicast group 1 corresponds to an enhancement layer 2 bitstream, and terminal devices in the multicast group 1 include the terminal device 610 and the terminal device 611. A multicast group 2 corresponds to an enhancement layer 1 bitstream, and terminal devices in the multicast group 2 include the terminal device 610, the terminal device 611, the terminal device 612, and the terminal device 613. A multicast group 3 corresponds to a basic layer bitstream, and terminal devices in the multicast group 3 include the terminal device 610, the terminal device 611, the terminal device 612, the terminal device 613, the terminal device 614, and the terminal device 615. In other words, it may be understood as that, in the terminal devices that access the target service, a terminal device having a worst received signal strength is the multicast group 3, and can receive only the basic layer bitstream. A terminal device having a strongest received signal is the multicast group 1, the multicast group 2, and the multicast group 3 at the same time, and can receive the basic layer bitstream, the enhancement layer 1 bitstream, and the enhancement layer 2 bitstream. A terminal device having a relatively strong receive signal is the multicast group 1 and the multicast group 2 at the same time, and can receive the basic layer bitstream and the enhancement layer 1 bitstream.

**Table 1**

| Multicast group identifier | Terminal device in the multicast group | Media flow layer corresponding to the multicast group |
|---|---|---|
| Multicast group 1 | Terminal device 610, and terminal device 611 | Enhancement layer 2 bitstream |
| Multicast group 2 | Terminal device 610, terminal device 611, terminal device 612, and terminal device 613 | Enhancement layer 1 bitstream |
| Multicast group 3 | Terminal device 610, terminal device 611, terminal device 612, terminal device 613, terminal device 614, and terminal device 615 | Base layer bitstream |

It may be learned that the determining a plurality of multicast groups may be understood as determining one or more of the following information about each multicast group in the plurality of multicast groups: a multicast group identifier, an identifier of a UE in the multicast group, a received signal strength range of a UE in the multicast group, a layer identifier of a media flow layer corresponding to the multicast group, a modulation and coding scheme (modulation and coding scheme, MCS), a bandwidth, or transmit power. It should be understood that the multicast group identifier uniquely identifies the multicast group, for example, a temporary mobile group identifier (temporary mobile group identifier, TMGI), a radio network temporary identifier (radio network temporary identifier, RNTI), a group RNTI (group RNTI, G-RNTI), or a multicast address. The identifier of the UE uniquely identifies the UE. The received signal strength range of the UE in the multicast group includes an upper limit value of the received signal strength of the UE in the multicast group and a lower limit value of the received signal strength of the UE in the multicast group. The layer identifier of the media flow layer uniquely identifies the media flow layer. The MCS, the bandwidth, and the transmit power are all for configuring a transmission speed of the multicast group for transmitting the media flow layer or a coverage area of the media flow layer corresponding to the multicast group. For example, an MCS, a bandwidth, or transmit power of a multicast group corresponding to the basic layer bitstream may be configured to minimize a transmission speed of the basic layer bitstream and maximize a coverage area of the basic layer bitstream.

It should be noted that the access network device may determine the plurality of multicast groups without receiving indication information. In other words, it may be understood as that the access network device spontaneously determines the plurality of multicast groups based on the layered coding information of the media flow corresponding to the target service and the information about the UE that access the target service. The access network device may further receive second indication information sent by another device (for example, an application server or a neighboring cell access network device) or a core network device (for example, the SMF network element). The second indication information indicates the access network device to determine the plurality of multicast groups. This is not specifically limited in this application.

S503: The access network device sends a media data packet of the target service to the UE based on the plurality of multicast groups.

After determining the plurality of multicast groups, the access network device sends, to the UE based on a multicast group corresponding to each UE, a media data packet of a target service corresponding to the multicast group. In other words, it may be understood as that the access network device may perform differentiated transmission on UEs in different multicast groups. The differentiated transmission may be understood as a difference in transmission speed or a difference in transmitted data volume. In other words, after dividing the UEs that access the target service into the plurality of multicast groups, the access network device may configure different data transmission parameters (affecting the transmission speed) for each multicast group, or configure different media flow layers in the media flow of the target service for each multicast group.

For example, the access network device divides the terminal devices that access the service 1 into three multicast groups. Specific information of each multicast group is shown in Table 1. The access network device sends a basic layer bitstream in a media flow of the service 1 to all terminal devices (the terminal device 610, the terminal device 611, the terminal device 612, the terminal device 613, the terminal device 614, and the terminal device 615) that access the service 1 , sends a basic layer bitstream and a enhancement layer 1 bitstream in a media flow of the service 1 to the terminal devices (the terminal device 610 and the terminal device 611) with the strongest received signal strength and the terminal devices (the terminal device 612 and the terminal device 613) with the stronger received signal strength in multicast mode and sends the basic layer bitstream, the enhancement layer 1 bitstream, and the enhancement layer 2 bitstream in the media flow of the service 1 to the terminal devices (the terminal device 610 and the terminal device 611) with the strongest received signal strength in multicast mode.

It may be learned that, by using the foregoing method, the access network device may determine the UEs that access the target services as the plurality of multicast groups. In this way, the access network device can perform differentiated multicast on the target service based on information about each multicast group, to maximize a multicast signal coverage area of the access network device and improve the transmission speed and a data throughput in the coverage area of the access network device In other words, to improve signal the coverage area of the access network device, the access network device transmits data of the target service to UE that is far away (which may be understood as a UE with a weak received signal), the access network device may send only the basic layer bitstream of the target service to the UE, to reduce a problem of a high packet loss rate in a transmission process caused by a high transmission speed, large transmitted data volume, and a weak signal received by the UE, so that the UE obtains basic image quality (namely, smooth image quality or standard definition image quality) after parsing a data packet. However, for a UE that is close to the access network device (which may be understood as a UE with a strong received signal), the access network device may increase a transmission speed and transmitted data volume for the UE. In this way, the UE obtains high image quality (namely, high definition image quality, ultra-definition image quality, or Blu-ray) after parsing a data packet, to improve the transmission speed and the data throughput in the coverage area of the access network device.

Based on FIG. 5, the following describes in detail a specific sending manner in which the access network device sends the media data packet of the target service to the UE based on the plurality of multicast groups.

### Method 1

That the access network device determines the plurality of multicast groups includes determining the multicast group identifier of each multicast group in the plurality of multicast groups and the layer identifier of the media flow layer corresponding to the multicast group. Further, the access network device sends, to the UE, a multicast group identifier of a multicast group to which the UE belongs. Based on a layer identifier of a media flow layer corresponding to the multicast group to which the UE belongs, the access network device sends, to the UE via the multicast group, a media data packet corresponding to the layer identifier of the media flow layer corresponding to the multicast group, where the media data packet of the target service carries the layer identifier of the media flow layer corresponding to the multicast group.

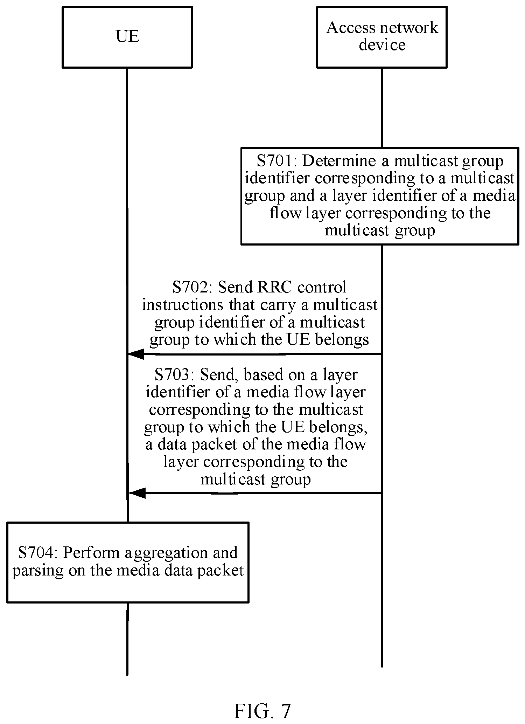

Specifically, FIG. 7 is a sending manner in which an access network device sends a media data packet of a target service to a UE. The sending manner includes S701 to S704.

S701: An access network device determines a multicast group identifier corresponding to each multicast group and a layer identifier of a media flow layer corresponding to the multicast group.

It may be understood as that the access network device establishes a correspondence between the multicast group identifier and the layer identifier of the media flow layer corresponding to the multicast group. For example, multicast group identifiers include an RNTI 1 and an RNTI 2, and layer identifiers of the media flow layer include a base layer 1, an enhancement layer 1, and an enhancement layer 2. The access network device determines the multicast group identifiers corresponding to the multicast groups and the layer identifiers of the media flow layer corresponding to the multicast groups, as shown in Table 2. To be specific, it may be understood that a layer identifier of the media flow layer having a correspondence with a multicast group 1 is a base layer 1, and layer identifiers of the media flow layer each having a correspondence with the multicast group 2 are an enhancement layer 1 and an enhancement layer 2.

**Table 2**

| Multicast group identifier | Layer identifier of the media flow layer corresponding to the multicast group |
|---|---|
| RNTI 1 | Base layer 1 |
| RNTI 2 | Enhancement layer 1 and enhancement layer 2 |

It should be known that, before the access network determines the layer identifiers of the media flow layer corresponding to the multicast groups, when delivering the media data packet of the target service, the AS adds same identification information to the media data packets that belongs to a same media flow layer, where the identification information identifies the media flow layer corresponding to the media data packet. Further, a UPF network element learns of, based on the identification information of an AS for a media data packet or the media decoding enhancement policy of the UPF network element, the media flow layer corresponding to the media data packet. Further, the UPF network element adds, to GTP-U layer header information of the media data packet, a layer identifier representing the media flow layer to which the data packet belongs.

S702: The access network device sends a radio resource control (radio resource control, RRC) control instruction to the UE, where the RRC control instruction carries a multicast group identifier of a multicast group to which the UE belongs.

The access network device sends the multicast group identifier (RNTI, TMGI, or G-RNTI) of the multicast group to which the UE belongs, to a UE that accesses the target service. It may be understood as that because there is the correspondence between the multicast group identifier and the layer identifier of the media flow layer, the access network device sends, to the UE according to the RRC control instructions, the multicast group identifier of the multicast group to which the UE belongs. In other words, the access network device notifies, according to the RRC control instruction, the UE of a media data packet corresponding to a layer identifier of a media flow layer that may be received. The UE aggregates a data packet of the media flow layer corresponding to each multicast group to which the UE belongs, and then sends an aggregated data packet to an application layer of the UE for data packet parsing.

S703: The access network device sends, based on a layer identifier of a media flow layer corresponding to the multicast group to which the UE belongs and the multicast group to which the UE belongs, the data packet of the media flow layer corresponding to the multicast group. In this way, the media data packet corresponding to the layer identifier of the media flow layer is sent to the UE.

After receiving the media data packet of the target service, the access network device maps, based on the layer identifier of the media flow layer carried in the media data packet, the media data packet to a data flow corresponding to a different multicast group. For example, the access network device determines the multicast group identifier corresponding to the multicast group and the layer identifier of the media flow layer corresponding to the multicast group, as shown in Table 2. In this case, after receiving the media data packet of the target data, the access network device maps, based on the layer identifier of the media flow layer carried in the media data packet, the media data packet to each different data flow. To be specific, a media data packet carrying the "base layer 1" may be mapped to a data flow 1, a media data packet carrying the "enhancement layer 1" may be mapped to a data flow 2, and a media data packet carrying the "enhancement layer 2" may be mapped to a data flow 3. The multicast group 1 corresponds to the data flow 1, and the multicast group 2 corresponds to the data flow 2 and the data flow 3.

S704: The UE receives the media data packet, where the media data packet is the media flow layer corresponding to the multicast group to which the UE belongs, and performs aggregation and parsing on the media data packet.

The UE obtained, based on multicast group identification information, a media data packet mapped to the data flows corresponding to the multicast group. The media data packet is the media flow layer corresponding to the multicast group to which the UE belongs. Further, the UE performs aggregation and parsing on the media data packet from each media flow layer of the plurality of multicast groups. For example, the UE is the multicast group 1 (where the corresponding media flow layer is the basic layer bitstream) and multicast group 2 (where the corresponding media flow layer is an enhancement layer 1 bitstream). In this case, after the UE receives the media data packet of the basic layer bitstream via the data flow 1 of the multicast group 1, and receives the media data packet of the enhancement layer bitstream 1 via the data flow 2 of the multicast group 2, the UE performs aggregation and decoding on the basic layer bitstream and the enhancement layer bitstream 1. To be specific, if the basic layer bitstream is standard definition image quality corresponding to the target service, the UE may obtain high-definition image quality by performing aggregation and decoding on the basic layer bitstream and the enhancement layer 1 bitstream.

In Method 1, the access network device maps, based on the layer identifier of the media flow layer carried in the media data packet, each media data packet to a data flow corresponding to each multicast group, to implement differentiated packet transmission of the target service. The method may be applied to an application scenario in which a plurality of media flow layers are transmitted to an access network device over a same transmission path where the plurality of media flow layers (including a basic layer bitstream and at least one enhancement layer bitstream) is obtained by coding a media flow of a target service by using a layered coding technology, and the transmission path may be understood as a QoS flow or a PDU session.

### Method 2

The access network device receives third indication information from the SMF network element, where the third indication information indicates a correspondence between a media flow layer and a QoS flow. Further, the access network device sends, to a multicast group to which the UE belongs, a media data packet in a QoS flow corresponding to a first media flow layer, where the first media flow layer is a media flow layer corresponding to the multicast group to which the UE belongs.

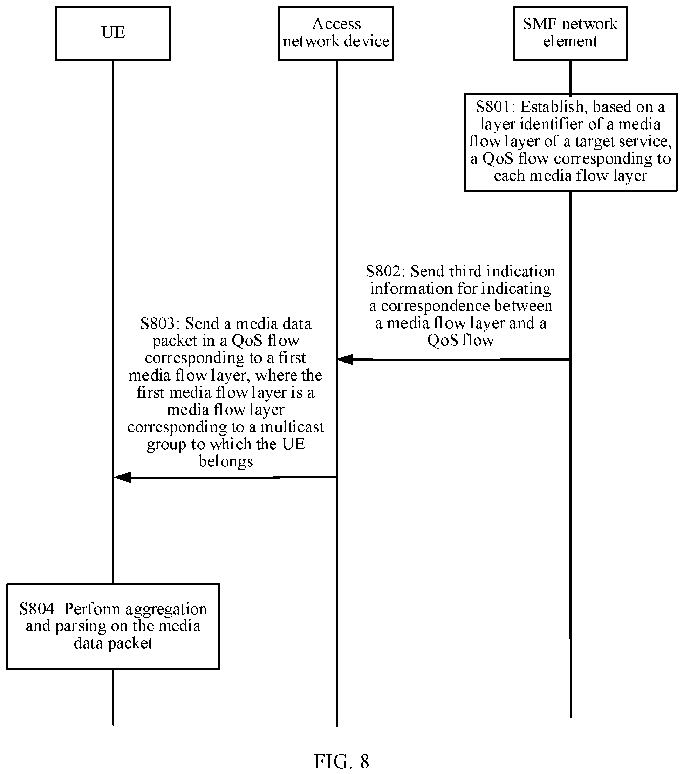

Specifically, FIG. 8 is another sending manner in which an access network device sends a media data packet of a target service to a UE. The sending manner includes S801 to S804.

S801: An SMF network element establishes, based on a layer identifier of a media flow layer, a QoS flow corresponding to each media flow layer.

A UPF network element may learn of, based on identification information of an AS for a media data packet or the media decoding enhancement policy of the UPF network element, a quantity of media flow layers corresponding to a media data packet of a target service and the layer identifier corresponding to each media flow layer. Further, the SMF network element establishes, based on the quantity of media flow layers and the layer identifier of each media flow layer, the QoS flow corresponding to each media flow layer. Further, the UPF network element adds, to GTP layer header information of the media data packet, the layer identifier representing the media flow layer to which the data packet belongs, or an identifier (QFI) of a QoS flow to which the data packet belongs. Further, the UPF network element may send, based on the layer identifier of the media flow layer to which the data packet belongs (or the identifier of the QoS flow to which the data packet belongs), data at the media flow layer to the QoS flow corresponding to the media flow layer. To be specific, it may be understood as that, after the SMF network element establishes, based on the quantity of media flow layers and the layer identifier, the QoS flow corresponding to each media flow layer, the UPF network element transmits, via a same QoS flow, data packets that have layer identifiers of a same media flow layer. Media data packets transmitted by different QoS flows have layer identifiers of different media flow layers.

For example, the layer identifiers of the media flow layers added by the UPF network element to the media data packet include a "base layer", an "enhancement layer 1, and an "enhancement layer 2". In other words, it may be understood as that the target service corresponds to three media flow layers: a basic layer bitstream, an enhancement layer 1 bitstream, and an enhancement layer 2 bitstream. Further, the SMF network element establishes three QoS flows based on the three media flow layers of the target service: a QoS flow 1, a QoS flow 2, and a QoS flow 3. A correspondence that is between each media flow layer and a QoS flow is: The basic layer bitstream corresponds to the QoS flow 1, then enhancement layer 1 bitstream corresponds to the QoS flow 2, and the enhancement layer 2 bitstream corresponds to the QoS flow 3.

S802: The SMF network element sends third indication information to the access network device, where the third indication information indicates a correspondence between a media flow layer and a QoS flow.

For example, the third indication information may be N2 SM information, and the N2 SM information indicates the correspondence between the media flow layer and the QoS flow: The basic layer bitstream corresponds to the QoS flow 1, the enhancement layer 1 bitstream corresponds to the QoS flow 2, and the enhancement layer 2 bitstream corresponds to the QoS flow 3.

S803: The access network device sends, to a multicast group to which the UE belongs, a media data packet in a QoS flow corresponding to a first media flow layer, where the first media flow layer is a media flow layer corresponding to a multicast group to which the UE belongs.

After receiving the media data packet of the target service via a different QoS flow, the access network device sends, based on the media flow layer corresponding to the multicast group and the correspondence between the media flow layer and the QoS flow, the data packet in the QoS flow corresponding to the first media flow layer to the multicast group. The first media flow layer is the media flow layer corresponding to the multicast group to which the UE belongs. In this way, the media data packet in the media flow layer corresponding to the multicast group to which the UE belongs is sent to the UE.

For example, the correspondence that is between the media flow layer and the QoS flow and that is indicated by the third indication information is: The basic layer bitstream corresponds to the QoS flow 1, the enhancement layer 1 bitstream corresponds to the QoS flow 2, and the enhancement layer 2 bitstream corresponds to the QoS flow 3. The UE is a multicast group 1 (where the corresponding media flow layer is the basic layer bitstream) and multicast group 2 (where the corresponding media flow layer is the enhancement layer 1 bitstream). In this case, the access network device maps a media data packet in the QoS flow 1 to a data flow 1, maps a media data packet in the QoS flow 2 to a data flow 2, sends a media data packet of the basic layer bitstream of the target service to the multicast group 1 via the data flow 1, and sends a media data packet of the enhancement layer 1 bitstream to the multicast group 2 via the data flow 2. In this way, the UE belonging to both the multicast group 1 and the multicast group 2 may receive the basic layer bitstream and the enhancement layer 1 bitstream of the target service via a data flow from the multicast group 1 and a data flow from the multicast group 2.

S804: The UE receives the media data packet, and performs aggregation and parsing on the media data packet.

After obtaining a media data packet mapped to a data flow corresponding to at least one multicast group to which the UE belongs, the UE performs aggregation and parsing on the media data packet from a media flow layer corresponding to the at least one multicast group.

### Method 3

The access network device receives third indication information from the SMF network element, where the third indication information indicates a correspondence between a media layer of the target service and a PDU session. Further, the access network device sends, to a multicast group to which the UE belongs, a media data packet in a PDU session corresponding to a first media flow layer, where the first media flow layer is a media flow layer corresponding to a multicast group to which the UE belongs.

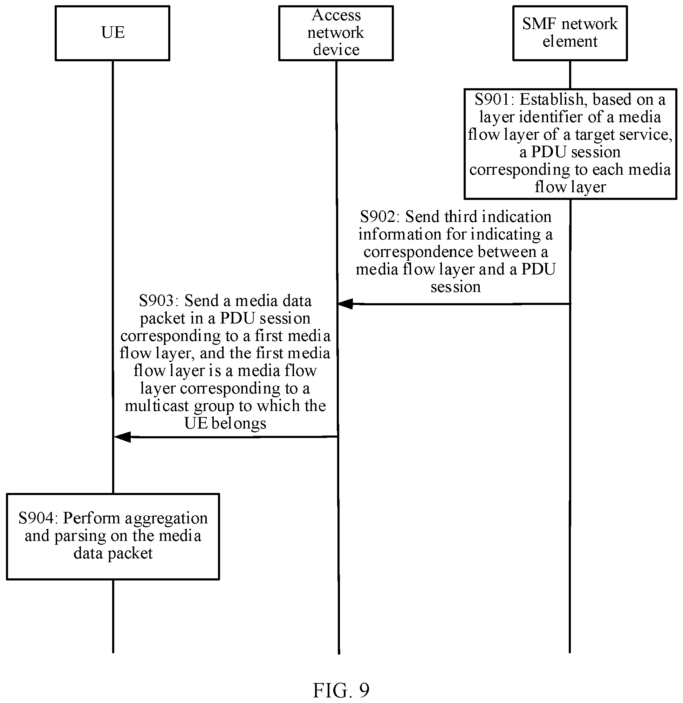

Specifically, FIG. 9 is still another sending manner in which an access network device sends a media data packet of a target service to a UE. The sending manner includes S901 to S904.

S901: An SMF network element establishes, based on a layer identifier of a media flow layer, a PDU session corresponding to each media flow layer.

A UPF network element may learn of, based on identification information of an AS for a media data packet or the media decoding enhancement policy of the UPF network element, a quantity of media flow layers corresponding to a media data packet of a target service and the layer identifier corresponding to each media flow layer. Further, the SMF network element establishes, based on the quantity of media flow layers and the layer identifier of each media flow layer, the PDU session corresponding to each media flow layer. Further, the UPF network element adds, to GTP layer header information of the media data packet, the layer identifier representing the media flow layer to which the data packet belongs. Further, the UPF network element may send, based on the layer identifier of the media flow layer to which the data packet belongs, data at the media flow layer to the PDU session corresponding to the media flow layer. To be specific, it may be understood as that the SMF network element establishes, based on the quantity of media flow layers and the layer identifier, the PDU session corresponding to each media flow layer, and then the UPF network element transmits, via a same PDU session, data packets that have layer identifiers of a same media flow layer. Media data packets transmitted by different PDU sessions have layer identifiers of different media flow layers.

For example, the layer identifiers of the media flow layers added by the UPF network element to the media data packet include a "base layer", an "enhancement layer 1, and an "enhancement layer 2". In other words, it may be understood as that the target service corresponds to three media flow layers: a basic layer bitstream, an enhancement layer 1 bitstream, and an enhancement layer 2 bitstream. Further, the SMF network element establishes three PDU sessions based on the three media flow layers of the target service: a PDU session 1, a PDU session 2, and a PDU session 3. A correspondence between each media flow layer and a PDU session is as follows: The basic layer bitstream corresponds to the PDU session 1, the enhancement layer 1 bitstream corresponds to the PDU session 2, and the enhancement layer 2 bitstream corresponds to the PDU session 3.

S902: The SMF network element sends third indication information to the access network device, where the third indication information indicates the correspondence between the media flow layer and the PDU session.

For example, the third indication information may be N2 SM information, and the N2 SM information indicates the correspondence between the media flow layer and the QoS flow: The basic layer bitstream corresponds to the PDU session 1, the enhancement layer 1 bitstream corresponds to the PDU session 2, and the enhancement layer 2 bitstream corresponds to the PDU session 3.

S903: The access network device sends, to a multicast group to which the UE belongs, a media data packet in a PDU session corresponding to a first media flow layer, where the first media flow layer is a media flow layer corresponding to a multicast group to which the UE belongs.

After receiving the media data packet of the target service via a different PDU session, the access network device sends, based on the media flow layer corresponding to the multicast group and the correspondence between the media flow layer and the PDU session, the data packet in the PDU session corresponding to the first media flow layer. The first media flow layer is the media flow layer corresponding to the multicast group to which the UE belongs. In this way, the media data packet in the media flow layer corresponding to the multicast group to which the UE belongs is sent to the UE.

For example, the correspondence that is between the media flow layer and the PDU session and that is indicated by the third indication information is: The basic layer bitstream corresponds to the PDU session 1, the enhancement layer 1 bitstream corresponds to the PDU session 2, and the enhancement layer 2 bitstream corresponds to the PDU session 3. The UE is a multicast group 1 (where the corresponding media flow layer is the basic layer bitstream) and multicast group 2 (where the corresponding media flow layer is the enhancement layer 1 bitstream). In this case, the access network device maps a media data packet in the PDU session 1 to a data flow 1, maps a media data packet in the PDU session 2 to a data flow 2, sends a media data packet of the basic layer bitstream of the target service to the multicast group 1 via the data flow 1, and sends a media data packet of the enhancement layer 1 bitstream to the multicast group 2 via the data flow 2. In this way, the UE belonging to both the multicast group 1 and the multicast group 2 receives the basic layer bitstream and the enhancement layer 1 bitstream of the target service.

S904: The UE receives the media data packet, and performs aggregation and parsing on the media data packet.

After obtaining a media data packet mapped to a data flow corresponding to at least one multicast group to which the UE belongs, the UE performs aggregation and parsing on the media data packet from a media flow layer corresponding to the at least one multicast group.

It may be learned that in Method 2 or Method 3, the SMF network element establishes, based on the quantity of media flow layers and the layer identifier, the QoS flow or PDU session corresponding to each media flow layer. Further, the access network device receives media data packets of the target service via different QoS flows or PDU sessions, maps media data packets in different QoS flows or PDU sessions to different data flows, and transmits the media data packets to the UE, to implement differentiated packet transmission for the target service. The method may be applied to an application scenario in which a core network device transmits a plurality of media flow layers to an access network device over different transmission paths.

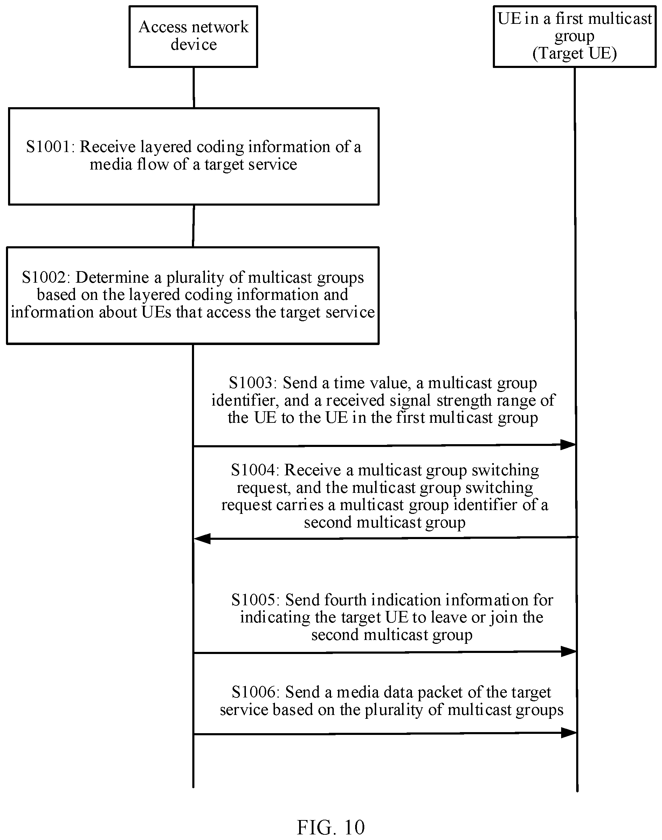

FIG. 10 is a schematic flowchart of another media data transmission method according to an embodiment of this application. As shown in FIG. 10, the media data transmission method includes the following S1001 to S1006. The method shown in FIG. 10 may be performed by an access network device, or may be performed by a chip of an access network device. In FIG. 10, an example in which the access network device performs the method is used for description.

S1001: An access network device receives layered coding information of a media flow, where the media flow is a target service.

S1002: The access network device determines a plurality of multicast groups based on the layered coding information and information about terminal devices UEs that access the target service.

For specific implementations of S1001 to S1002, refer to specific implementations of S501 to S502 in the embodiment shown in FIG. 5. Details are not described herein again.

The determining a plurality of multicast groups includes determining a multicast group identifier of each of the plurality of multicast groups and a received signal strength range of a UE in the multicast group.

S1003: The access network device sends a time value, the multicast group identifier, and the received signal strength range of the UE in the multicast group to a UE in a first multicast group, where the first multicast group is one of the plurality of multicast groups.

The time value is used by the UE to send a multicast group switching request. The time value may be received by the access network device from an SMF network element, or the time value may be determined by the access network device. This is not specifically limited in this application. It should be noted that the time value may be adjusted depending on a specific application scenario. This is not specifically limited in this application.

Specifically, that the access network device sends a time value, the multicast group identifier, and the received signal strength range of the UE in the multicast group to each UE that accesses the target service includes but is not limited to the following two cases.

### Scenario 1

For each UE that accesses the target service, a multicast group to which the UE belongs is determined as the first multicast group, and the access network device sends, to the UE, the time value, a multicast group identifier of the first multicast group, and a received signal strength of the UE in the first multicast group. For example, the access network device determines that UE 1 belongs to multicast group 1, where a multicast group identifier of multicast group 1 is an RNTI 1, and a received signal strength range of UE in a multicast group corresponding to multicast group 1 is [TH 0, TH1) . In this case, the access network device sends the time value, the RNTI 1, and [TH 0, TH 1) to the UE 1.

### Scenario 2

For each UE that accesses the target service, a multicast group to which the UE belongs is determined as the first multicast group, and the access network device sends, to the UE, the time value, a multicast group identifier of a third multicast group, and a received signal strength of a UE in the third multicast group. A difference between a lower limit of the received signal strength of the UE corresponding to the third multicast group and a lower limit of the received signal strength of the UE corresponding to the first multicast group is less than a first threshold. It should be noted that a specific value of the first threshold may be adjusted depending on a specific application scenario. This is not specifically limited in this application.

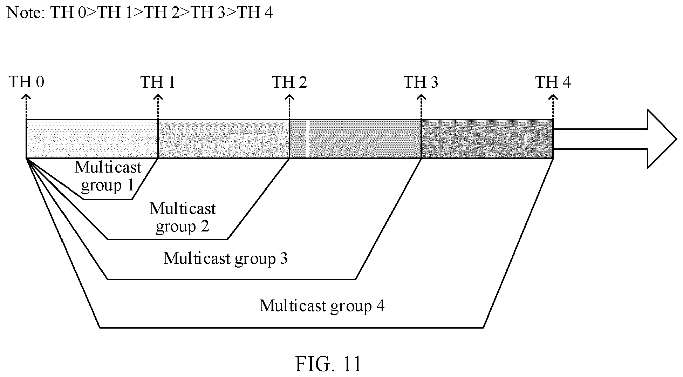

For example, based on received signal strengths of the UEs that access the target service, the UEs that access the target service are classified into four batches. The four batches of UEs that access the target service are sorted in ascending order of the received signal strengths of the UEs: a first batch of UEs, a second batch of UEs, a third batch of UEs, and a fourth batch of UEs. In this case, the access network device may group the UEs that access the target service into four multicast groups. FIG. 11 shows received signal strength ranges of the UEs in four multicast groups. It should be understood that the direction indicated by the arrow is a direction away from the access network device, which may be understood as that the received signal strength of the UE becomes weaker (to be specific, TH 0>TH 1>TH 2>TH 3>TH 4) along a direction indicated by the arrow. A received signal strength range of the UE corresponding to the multicast group 1 is [TH 0, TH 1) , and the multicast group 1 is corresponding to an enhancement layer 3 bitstream. It may be understood that UEs in the fourth batch of the foregoing UEs with the strongest received signal can receive the multicast enhancement layer 3 bitstream in the multicast group 1. The received signal strength range of the UEs in the multicast group corresponding to the multicast group 2 is [TH 0, TH 2) , and the multicast group 2 corresponds to the enhancement layer 2 bitstream. It may be understood that the foregoing UEs of the third gradient and UEs of the fourth batch can receive the multicast enhancement layer 2 bitstream in the multicast group 1. A received signal strength range of the UE in the multicast group corresponding to the multicast group 3 is [TH 0, TH 3) and the multicast group 3 corresponds to an enhancement layer 1 bitstream. It may be understood that the foregoing UEs in the second batch, UEs in the third gradient, and UEs in the fourth batch may receive the multicast enhancement layer 1 bitstream in the multicast group 1. A received signal strength range of the UEs in the multicast group corresponding to the multicast group 4 is [TH 0, TH 4) , and the multicast group 4 is corresponding to a basic layer bitstream, and may be understood as all UEs that access the target service (in other words, UEs in the first batch, UEs in the second batch, UEs in the third batch, and UEs in the fourth batch) can receive the multicast basic layer bitstream in the multicast group 1. For the UE 2 that is both the multicast group 3 and the multicast group 4, the multicast group 3 and the multicast group 4 are determined as the first multicast group. If a difference between that UE receive signal strength lower limit TH 2 in multicast group 2 and the UE receive signal strength lower limit TH 3 in multicast group 3 (the first multicast group) is less than the first threshold, in this case, the access network device determines the multicast group 2 as the third multicast group, and sends, to the UE 2, the time value, the multicast group identifier of the multicast group 2 and the received signal strength range [TH 0, TH 2) of the UE in the multicast group 2, the multicast group identifier of the multicast group 3 and the received signal strength range [TH 0, TH 3) of the UE in the multicast group 3, and the multicast group identifier of the multicast group 4 and the received signal strength range [TH 0, TH 4) of the UE in the multicast group 4. In other words, in addition to sending the multicast group identifier of the first multicast group to which the UE 2 is the UE 2, the access network device further allows the UE 2 to receive the enhancement layer bitstream of the third multicast group (the lower limit of the received signal strength of the UE of the third multicast group is greater than the lower limit of the received signal strength of the first multicast group) when reaching the strength range of the third multicast group. In other words, the access network device sends, to the UE, the multicast group identifier of the multicast group for multicasting the enhancement layer bitstream.

S1004: The access network device receives a multicast group switching request from a target UE of the first multicast group, where the multicast group switching request carries a multicast group identifier of a second multicast group.

The first duration of the target UE is greater than or equal to the time value, and the first duration is duration in which a received signal strength is greater than a received signal strength range of UE in a second multicast group in the first multicast group. The second multicast group is a group that the target UE wants to leave. In other words, it may be understood that when the second multicast group is a group that the target UE wants to leave (in other words, the second multicast group is one of the first multicast groups), the first duration is duration in which the received signal strength of the target UE is less than the received signal strength lower limit value of the UE in the second multicast group. When the second multicast group is different from the first multicast group, in other words, when the second multicast group is a group that the target UE wants to join (in other words, the second multicast group is a multicast group other than the first multicast group), the first duration is duration in which the received signal strength is greater than or equal to the received signal strength lower limit value of the UE in the second multicast group.

Based on the two cases in which the access network device sends the time value, the multicast group identifier, and the received signal strength range of the UE in the multicast group to the UE in S1003, there are also two cases in which the UE sends the multicast group switching request to the access network.

### Scenario 1

For Case 1 in S1003, the UE receives, from the access network device, only the identifier of the first multicast group to which the UE belongs and the strength range of the signal received by the UE in the first multicast group. In this case, the multicast group switching request received by the access network device from the target UE carries the multicast group identifier of the second multicast group, and the second multicast group is one of the first multicast groups. In other words, it may be understood that the second multicast group is a multicast group that the target UE wants to leave.

The UE receives the time value, the multicast group identifier, and the received signal strength in the multicast group that are sent by the access network device, determines the multicast group to which the UE belongs as the first multicast group, and detects the received signal strength of the UE. If the UE detects that the received signal strength of the UE exceeds the received signal strength range of the UE in the first multicast group. In this case, the UE starts timing of the first duration. If the UE detects that the received signal strength range of the UE falls within the received signal strength range of the UE in the first multicast group. In this way, the UE clears the first duration and restarts timing of the first duration when the received signal strength of the UE exceeds the received signal strength range of the UE in the first multicast group next time. If the UE detects that the first duration is longer than the foregoing time value, the UE is determined as the target UE. The target UE determines the first multicast group as the second multicast group, and sends the multicast group switching request to the access network.

For example, the UE is the multicast group 3 and the multicast group 4 in FIG. 11. In this case, the UE receives the multicast group identifier of the first multicast group sent by the access network device (in other words, the multicast group identifier of the multicast group 3 and the multicast group identifier of the multicast group 4) and a received signal strength range of the UE in the first multicast group (in other words, [TH 0, TH 3) corresponding to the multicast group 3 and [TH 0, TH 3) corresponding to the multicast group 4). That UE detects that the received signal strength of the UE exceeds the received signal strength range of the UE in the first multicast group, it may be understood as that the UE detects that the received signal strength of the UE exceeds [TH 0, TH 3) or [TH 0, TH 4) . In other words, it may be understood that when the UE detects that the received signal strength of the UE is less than TH 3, it may be considered that the UE exceeds the received signal strength range of the UE in the multicast group of the multicast group 3, and timing of the first duration is started. If the first duration is greater than the time value, the UE is determined as the target UE, and the multicast group 3 is determined as the second multicast group. When the UE detects that the received signal strength of the UE is less than TH 4, it may be considered that the UE exceeds the received signal strength range of the UE in the multicast group of the multicast group 4 and exceeds the received signal strength range of the UE in the multicast group of the multicast group 3, and timing of the first duration is started. If the first duration is greater than the time value, the UE is determined as the target UE, and both the multicast group 3 and the multicast group 4 are determined as the second multicast group.

### Scenario 2

For Case 2 in S1003, the UE receives, from the access network device, the identifier of the first multicast group to which the UE belongs and the strength range of the signal received by the UE in the first multicast group. The third multicast group identifier and the strength range of the signal received by the UE in the third multicast group are further received. In this case, the multicast group switching request sent by the target UE carries the identifier of the second multicast group, and the second multicast group is one of the foregoing third multicast groups.

After the UE receives the time value, the multicast group identifier, and the received signal strength in the multicast group that are sent by the access network device, the UE detects the received signal strength of the UE. If the UE detects that the received signal strength of the UE reaches the received signal strength range of the UE in the third multicast group, the UE starts timing of the first duration. If the UE detects that the received signal strength range of the UE falls within the received signal strength range of the UE in the first multicast group. In this way, the UE clears the first duration and restarts timing of the first duration when the received signal strength of the UE reaches the received signal strength range of the UE in the third multicast group next time. If the UE detects that the first duration is longer than the foregoing time value, the UE is determined as the target UE. The target UE determines the third multicast group as the second multicast group, and sends the multicast group switching request to the access network.

For example, refer to FIG. 11. The target UE is the first multicast group (in other words, multicast group 3 and multicast group 4 in FIG. 11), the access network device sends the multicast group identifier of the first multicast group and the received signal strength range corresponding to the first multicast group to the target UE (in other words, [TH 0, TH 3) corresponding to multicast group 3 and [TH 0, TH 4) corresponding to multicast group 4), and also sends the multicast group identifier of the third multicast group (the multicast group 1 and the multicast group 2) and the received signal strength range corresponding to the third multicast group to the target UE (in other words, [TH 0, TH1) corresponding to the multicast group 1 and [TH 0, TH 2) corresponding to the multicast group 2). That UE detects that the received signal strength of the UE reaches the received signal strength range of the UE in the third multicast group may be understood as that if the UE detects that the received signal strength of the UE is [TH 0, TH 2) in the received signal strength range of the UE in the multicast group 2, starting timing of the first duration, and if the first duration is greater than the time value, determining the UE as the target UE, and determining the multicast group 2 as a second multicast group; and if the UE detects that the received signal strength of the UE is [TH0, TH1) it is determined that the UE is in a received signal strength range of the UE in the multicast group 1 and that the UE is in a received signal strength range of the UE in the multicast group 2, and starting timing of the first duration, where if the first duration is greater than the time value. In this case, the UE is determined as the target UE, and the multicast group 1 and the multicast group 2 are determined as the second multicast group.

It should be known that, it may be learned from the foregoing that the target UE is one of the UEs of the first multicast group. For ease of understanding, in FIG. 10, the UE represents both the UE of the first multicast group and the target UE.

S1005: The access network device sends fourth indication information to the target UE based on a received signal strength of the target UE and the received signal strength range of the UE in the multicast group, where the fourth indication information indicates the target UE to leave or join the second multicast group.

It should be noted that, when the second multicast group is one of the first multicast groups, the switching request sent by the target UE carries the second multicast group identifier. In other words, it indicates that the target UE wants to leave the second multicast group. It may be understood that the target UE cannot receive, via the second multicast group, a data packet at a media flow layer corresponding to the second multicast group. In a scenario, the UE switches from high-definition image quality of an original video service to standard-definition image quality because received signal strength becomes weaker. When the second multicast group is different from the first multicast group, the switching request sent by the target UE carries the second multicast group identifier. In other words, it indicates that the target UE wants to join the second multicast group. It may be understood that the target UE wants to receive, via the second multicast group, a data packet at a media flow layer corresponding to the second multicast group. In a scenario, the UE switches from high-definition image quality of an original video service to ultra-definition image quality or Blu-ray image quality because received signal strength becomes stronger. It may be learned that for the two cases in S1004, S1005 has two corresponding cases, which are specifically as follows:

### Scenario 1

For scenario 1 in S1004, the second multicast group is one of the first multicast groups. In other words, it may be understood that the second multicast group is a multicast group that the target UE wants to leave. In this case, the access network device detects the received signal strength of the target UE, and determines the second multicast group from the first multicast group based on the received signal strength ranges of the UE in each multicast group in the plurality of multicast groups of the target service. Further, the access network device sends fourth indication information to the target UE, where the fourth indication information carries the multicast group identifier of the second multicast group. After receiving the fourth indication information, the UE leaves the second multicast group based on instructions of the fourth indication information. The fourth indication information includes but is not limited to RRC control instructions.

For example, FIG. 11 shows receive strength signal ranges of UEs in four multicast groups determined by an access network device. First multicast groups corresponding to the target UE are a multicast group 2, a multicast group 3, and a multicast group 4. In other words, the received signal strength of the UE is within the range of ( TH1, TH 2) . The access network device receives the multicast group switching request sent by the target UE. The access network device detects that the received signal strength of the target UE is N, and N is a value within a received signal strength range [TH 2, TH 3) of the UE in the multicast group 3. In other words, the received signal strength of the target UE is less than the received signal strength lower limit TH 2 of the multicast group 2 in the first multicast group, and the access network device determines that the multicast group 2 is the second multicast group, and sends, to the UE, the fourth indication information that carries the multicast group identifier of the multicast group 2. After the target UE receives the fourth indication information, the target UE leaves the multicast group 2. In other words, the target UE receives the data packet at the media flow layer corresponding to the multicast group 3 and the data packet at the media flow layer corresponding to the multicast group 4, and no longer receives the data packet at the media flow layer corresponding to the multicast group 2.

### Scenario 2

For scenario 2 in S1004, when the second multicast group is not one of the first multicast group, the switching request sent by the target UE carries the second multicast group identifier. In other words, it indicates that the target UE wants to join the second multicast group. In this case, the access network device detects whether the received signal strength of the target UE falls within the receive strength range of the UE in the second multicast group (It may be understood that the target UE is greater than or equal to the receive strength lower limit of the UE in the second multicast group). If the target UE is greater than or equal to the receive strength lower limit of the UE in the second multicast group, the access network device sends fourth indication information to the UE, where the fourth indication information is used to acknowledge (or understand as agreeing to) the multicast group switching request sent by the target UE. If the received signal strength of the target UE is not in the receive strength range of the UE in the second multicast group (It may be understood that the target UE is less than the receive strength lower limit of the UE in the second multicast group). In this case, the access network device sends fifth indication information to the UE, where the fifth indication information is used to reject the multicast group switching request sent by the target UE.

For example, refer to FIG. 11. If the first multicast groups corresponding to the target UE are the multicast group 3 and the multicast group 4, in other words, the received signal strength of the UE falls within a range of < TH 2,TH 3) . The access network device receives the multicast group switching request sent by the target UE. The access network device detects that the received signal strength of the target UE is N, and N is a value in a received signal strength range ( TH1,TH2] of the UE in the multicast group 2. In other words, the received signal strength of the target UE is greater than or equal to the received signal strength lower limit TH 2 of the multicast group 2, and the access network device determines that the multicast group 2 is the second multicast group, and sends, to the UE, the fourth indication information that carries the multicast group identifier of the multicast group 2. After the target UE receives the fourth indication information, the target UE joins the multicast group 2. In other words, the target UE receives the data packet at the media flow layer corresponding to the multicast group 2, a data packet at the media flow layer corresponding to the multicast group 3, and the data packet at the media flow layer corresponding to the multicast group 4.

S1006: The access network device sends a media data packet of the target service to the UE based on the plurality of multicast groups.

For a specific implementation of S1006, refer to specific implementation of S503 shown in FIG. 5. Details are not described herein again.

By using the foregoing method, the UE may dynamically perform multicast group switching based on received signal strength of the UE, to optimize performance of receiving the target service by the target UE. For example, in the case that the target service is a video service, when a received signal of the target UE decreases, the target UE may switch to a multicast group that receives only a basic layer bitstream, to reduce a transmission speed of a media data packet and a packet loss situation in a transmission process. In this way, the target UE obtains standard-definition image quality of the video service, and smoothness of parsing the target service by the UE is ensured. When a received signal of the target UE is enhancement, the target UE may switch to a multicast group that receives a basic bitstream and a plurality of enhancement layer bitstreams, to improve a transmission speed of media data, so that the target UE obtains ultra-definition image quality, Blu-ray image quality, or the like of a video service. This feature improves user experience of target UEs.

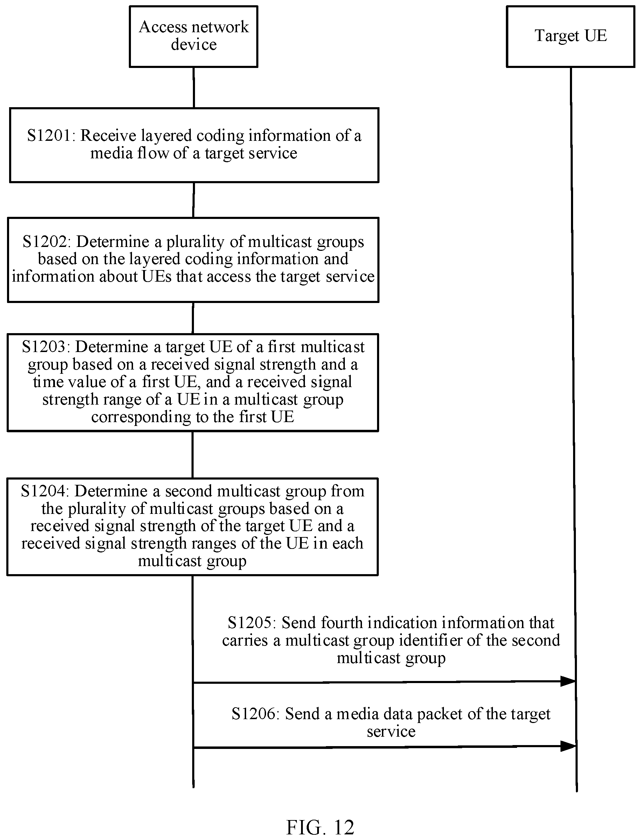

FIG. 12 is a schematic flowchart of still another media data transmission method according to an embodiment of this application. As shown in FIG. 12, the data transmission method includes the following S1201 to S1206. The method shown in FIG. 12 may be performed by an access network device, or may be performed by a chip of an access network device. In FIG. 12, an example in which the access network device performs the method is used for description.

S1201: An access network device receives layered coding information of a media flow, where the media flow is a target service.

S1202: The access network device determines a plurality of multicast groups based on the layered coding information and information about UEs that access the target service.

For specific implementations of S1201 and S1202, refer to specific implementations of S1001 and S1002 in the embodiment shown in FIG. 10. Details are not described herein again.

S1203: The access network device determines target UE of the first multicast group based on the received signal strength and the time value of the first UE, and the received signal strength range of the UE in the multicast group corresponding to the first UE. The first UE is one of UEs that access the target service, and the first duration of the target UE is greater than or equal to the time value.

When the second multicast group is one of the first multicast groups, the first duration is duration in which the received signal strength is greater than the received signal strength range of the UE in the second multicast group. When the second multicast group is different from the first multicast group, the first duration is duration in which the received signal strength reaches the received signal strength range of the UE in the second multicast group. The following discusses this solution from two cases of the first duration.

Scenario 1: The first duration is duration in which the received signal strength exceeds the received signal strength range of the UE in the second multicast group, and the second multicast group is one or more of the first multicast groups.

The access network device may perceive (or detect) received signal strengths of all UEs that access the target service. For any UE in all UEs that access the target service, the UE is considered as first UE, and a multicast group to which the first UE belongs is determined as the first multicast group. When the access network device senses that the received signal strength of the first UE is greater than the received signal strength range of the UE in the second multicast group. In other words, it may be understood that the received signal strength of the first UE is less than the lower limit of the received signal strength in the second multicast group (where the second multicast group is one of the first multicast groups) and the access network device starts timing of the first duration. If the first duration is greater than or equal to the time value, the access network device determines the first UE as the target UE.

For example, the first UE is the UE 1, and the first multicast group to which the UE 1 belongs is a multicast group 3 and a multicast group 4 in FIG. 11. In this case, if the UE 1 detects that the received signal strength of the UE 1 exceeds the received signal strength range of the UE in the first multicast group, it may be understood that the UE detects that the received signal strength of the UE 1 exceeds [TH 0, TH 3) or [TH 0, TH 4). In other words, it may be understood that when the UE detects that the received signal strength of the UE is less than TH 3, it may be considered that the UE exceeds the received signal strength range of the UE in the multicast group of the multicast group 3, and timing of the first duration is started. If the first duration is greater than the time value, the UE is determined as the target UE. When the UE detects that the received signal strength of the UE is less than TH 4, it may be considered that the UE exceeds the received signal strength range of the UE in the multicast group of the multicast group 3 and exceeds the received signal strength range of the UE in the multicast group of the multicast group 4, and timing of the first duration is started. If the first duration is greater than the time value, the UE is determined as the target UE.

Scenario 2: The first duration is duration in which the received signal strength reaches the received signal strength range of the UE in the second multicast group, and the second multicast group is different from the first multicast group.

The access network device may perceive (or detect) received signal strengths of all UEs that access the target service. For any UE in all UEs that access the target service, the UE is considered as first UE, and a multicast group to which the first UE belongs is determined as the first multicast group. When the access network device senses that the received signal strength of the first UE reaches the received signal strength range of the UE in a multicast group other than the first multicast group. In other words, it may be understood that the received signal strength of the first UE is greater than or equal to the lower limit of the received signal strength in the second multicast group (in this case, the second multicast group is different from the first multicast group), and the access network device starts timing of the first duration. If the first duration is greater than or equal to the time value, the access network device determines the first UE as the target UE.

For example, the first UE is the UE 1, and the first multicast group to which the UE 1 belongs is a multicast group 3 and a multicast group 4 in FIG. 11. In this case, if the UE 1 detects that the received signal strength of the UE 1 reaches the received signal strength range of the UE in the multicast group other than the first multicast group, it may be understood that the UE detects that the received signal strength of the UE is in ( TH1, TH 2] or [TH0, TH1]. In other words, when the UE detects that the received signal strength of the UE is greater than TH 2, it may be considered that the first UE reaches the received signal strength range of the UE in the multicast group of the multicast group 2, and timing of the first duration is started. If the first duration is greater than the time value, the first UE is determined as the target UE. When the first UE detects that the received signal strength of the first UE is greater than TH 1, it may be considered that the UE reaches the received signal strength range of the UE in the multicast group of the multicast group 1 and reaches the received signal strength range of the UE in the multicast group of the multicast group 2, and timing of the first duration is started. If the first duration is greater than the time value, the UE is determined as the target UE.

S1204: The access network device determines a second multicast group from a plurality of multicast groups based on the received signal strength of the target UE and the received signal strength ranges of UEs in the multicast groups.

For scenario 1 in S1203, the second multicast group is one or more of the first multicast groups to which the first UE belongs. In this case, the second multicast group may be understood as a multicast group from which the target UE is to leave. The access network device determines the second multicast group based on the received signal strength range of the target UE and the received signal strength range of the UE in the first multicast group. For example, the first multicast groups to which the target UE belongs are a multicast group 3 and a multicast group 4 in FIG. 11. In this case, if the access network device detects that the received signal strength of the target UE exceeds the intra-group received signal strength range [TH 0, TH 3) of the multicast group 3, in other words, the received signal strength of the target UE is less than TH 3, the access network device determines the second multicast group of the multicast group 3. If the access network device detects that the received signal strength of the target UE exceeds the multicast group received signal strength range [TH 0, TH 4) of the multicast group 4, in other words, when the access network device detects that the received signal strength of the target UE is less than TH 4, the access network device determines that the multicast group 3 and the multicast group 4 are the second multicast group.

For scenario 2 in S1203, the second multicast group is different from the first multicast group. In this case, the second multicast group may be understood as a multicast group to which the target UE is to join. The access network device determines the second multicast group based on the received signal strength range of the target UE and the received signal strength range of the UE in the first multicast group. For example, the first multicast groups to which the target UE belongs are a multicast group 3 and a multicast group 4 in FIG. 11. In this case, it is assumed that the access network device detects that the received signal strength range of the target UE is (TH1, TH2] or (TH1, TH 2] . In other words, it may be understood that when detecting that the received signal strength of the target UE is greater than TH 2, the access network device may consider that the target UE reaches the received signal strength range of the UE in the multicast group of the multicast group 2, and determine the multicast group 2 as the second multicast group. When the access network device detects that the received signal strength of the target UE is greater than TH 1, it may be considered that the target UE reaches the received signal strength range of the UE in the multicast group of the multicast group 1, and the access network device determines the multicast group 1 and the multicast group 2 as the second multicast group.

S1205: The access network device sends fourth indication information to the target UE, where the fourth indication information carries the multicast group identifier of the second multicast group, and the fourth indication information indicates the target UE to join or leave the second multicast group from the first multicast group.

For example, the fourth indication information may be RRC control instructions, and the fourth indication information may indicate the target UE to join or leave the second multicast group. When the second multicast group is one or more of the first multicast groups, the fourth indication information indicates the target UE to leave the second multicast group. For example, the first multicast groups corresponding to the target UE are the multicast group 2, the multicast group 3, and the multicast 4. If the fourth indication information carries the multicast group identifier of the multicast group 2, the fourth indication information indicates the target UE to leave the multicast group 2. When the second multicast group is different from the first multicast group, the fourth indication information indicates the target UE to join the second multicast group. For example, the first multicast groups corresponding to the target UE are the multicast group 2, the multicast group 3, and the multicast 4. If the fourth indication information carries the multicast group identifier of the multicast group 1, the fourth indication information indicates the target UE to join the multicast group 1.

Optionally, the fourth indication information may indicate a fourth multicast group obtained after the target UE is switched from the first multicast group. For example, the first multicast groups corresponding to the target UE are the multicast group 2, the multicast group 3, and the multicast group 4. In other words, the received signal strength of the UE is within (TH 1, TH 12). When the second multicast group is the multicast group 2 (in other words, the target UE is about to leave the multicast group 2), the fourth indication information sent by the access network device to the target UE is an RRC control instructions. The RRC control instructions carry the multicast group identifiers of the multicast group 3 and the multicast group 4. In other words, after the fourth indication information indicates the target UE to leave the multicast group 2, the target UE receives the data packet at the media flow layer corresponding to the multicast group 3 and the data packet at the media flow layer corresponding to the multicast group 4. When the second multicast group is the multicast group 1 (in other words, the target UE is to join the multicast group 1), the fourth indication information sent by the access network device to the target UE carries the multicast group identifiers of the multicast group 1, the multicast group 2, the multicast group 3, and the multicast group 4. In other words, the fourth indication information indicates the target UE to receive a data packet at the media flow layer corresponding to multicast group 1, a data packet at the media flow layer corresponding to multicast group 2, a data packet at the media flow layer corresponding to multicast group 3, and a data packet corresponding to multicast group 4 after the target UE joins multicast group 1. Packets at the flow layer.

S1206: The access network device sends a media data packet of the target service to the UE based on the plurality of multicast groups.

For a specific implementation of S1206, refer to specific implementation of S1006 in the embodiment shown in FIG. 10. Details are not described herein again.

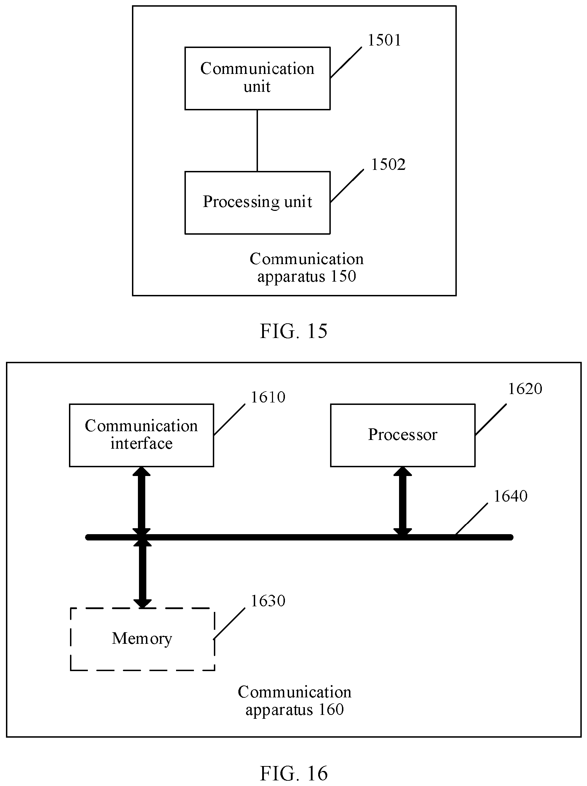

By using the foregoing method, the access network device may dynamically optimize multicast group based on received signal strength of the UE, to optimize performance of receiving the target service by the target UE. Compared with the media data transmission method disclosed in FIG. 16, the media data transmission method disclosed in FIG. 12 does not need to send, by the access network device, the fourth indication information to the UE to indicate the UE to perform multicast group switching after the UE sends the multicast group switching request to the access network device. In other words, it may be understood that in the media data transmission method disclosed in FIG. 12, performance of receiving a target service by the target UE may be optimized, and communication transmission resources may be saved.

Optionally, based on the media data transmission methods described in FIG. 5, FIG. 7, FIG. 8, FIG. 9, FIG. 10, and FIG. 12 in this application, in a possible implementation, determining a plurality of multicast groups includes: determining an identifier of a UE in each of the plurality of multicast groups. In this case, the access network device sends the identifier of the UE in each multicast group to the SMF network element, so that the SMF network element determines the traffic statistics collection/charging policy of each multicast group or each UE based on the identifier of the UE in each multicast group.

In another possible implementation, after the access network device determines the layered coding information and the information about the terminal devices UEs that access the target service, and determines the plurality of multicast groups, the access network device sends the quantity of multicast groups of the target service to the application server AS. In this way, the AS may adjust the layered coding information of the media flow in the target service based on the quantity of the multicast groups. For example, after performing layered coding on the media data packet of the target service by using a layered coding technology, the AS obtains three media flow layers corresponding to the target service: a basic layer bitstream, an enhancement layer 1 bitstream, and an enhancement layer 2 bitstream. Further, the access network device determines two multicast groups based on the layered coding information and the information about the UE that accesses the target service, where a media flow layer corresponding to multicast group 1 is a basic layer bitstream, and a media flow layer corresponding to multicast group 2 is: a basic layer bitstream, an enhancement layer 1 bitstream, and an enhancement layer 2 bitstream. If the quantity of multicast groups sent by the access network device to the AS is 2, the AS may adjust the layered coding information of the target service based on the quantity of multicast groups, and recode the target service by using a layered coding technology, to obtain two layers of media flow layers corresponding to the target service. In this way, the layered coding information of the media flow of the target service is used for the quantity of multicast groups determined by the access network device.

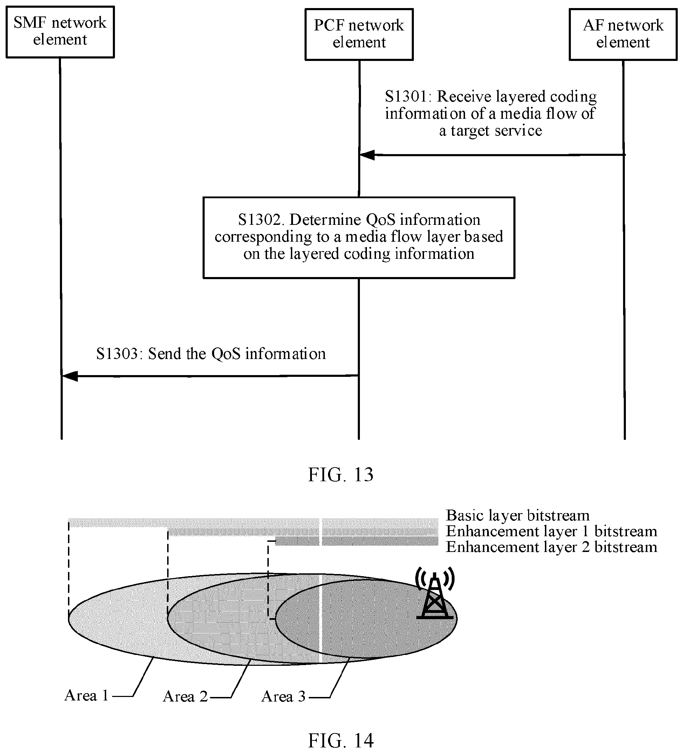

FIG. 13 is a schematic flowchart of yet another media data transmission method according to an embodiment of this application. As shown in FIG. 13, the media data transmission method includes the following S1301 to S1303. The method shown in FIG. 13 may be performed by a PCF network element, or may be performed by a chip of a PCF network element. In FIG. 13, an example in which the PCF network element is an execution body of the method is used for description.

S1301: A PCF network element receives layered coding information of a media flow from an AF network element, where the media flow is a target service.

Specifically, the layered coding information of the media flow comes from an AS of a third party, and the AF network element may send the layered coding information to the PCF network element via the NEF network element.

The layered coding information includes one or more of the following information: first indication information, a quantity of media flow layers, a layer identifier of each media flow layer, or a network requirement of each media flow layer. For example, the first indication information indicates that the media flow is a layered media flow. It should be understood that the network requirement of the media flow may be understood as a network transmission requirement (for example, network bandwidth) of the media flow. For example, the network requirement of the basic layer bitstream is 20 Mbps network bandwidth, and the network requirement of the enhancement layer 1 bitstream is 10 Mbps network bandwidth. The network requirement of the enhancement layer 2 bitstream is 20 Mbit/s network bandwidth.

S1302: The PCF network element determines, based on the layered coding information, QoS information corresponding to a media flow layer.

The PCF network element determines, based on the layered coding information of each media flow, QoS information corresponding to each media flow layer. The QoS information includes a tolerable packet loss rate and/or a coverage rate, and the QoS information reflects a network requirement corresponding to each media flow layer of the target service. It should be understood that the tolerable packet loss rate is a ratio of a quantity of lost data packets allowed by the media flow layer to a total quantity of data packets transmitted by the media flow. The coverage rate may be understood as a ratio of a transmission coverage distance of a media flow layer to a maximum signal coverage distance of an access network device.

S1303: The PCF network element sends the QoS information to the SMF network element.

The PCF network element sends the QoS information corresponding to the media flow layer to the SMF network element. Specifically, the PCF network element may send the QoS parameter to the SMF network element according to a PCC rule or a PDU session policy information.
sending, by the SMF network element, the QoS information to the access network device, so that the access network device configures, based on QoS information corresponding to each media flow layer, a transmission parameter for a data radio bearer (data radio bearer, DRB) for transmitting each media flow, and sends the media data packet of the target service to the UE via the DRB. It should be learned that the sending, by the SMF network element, the QoS information to the access network device may be understood as generating a QoS parameter (namely, a QoS profile) based on the QoS information, and sending the QoS profile to the access network device.

For ease of understanding, the following describes this solution in detail by using a complete example.

For example, the AS performs layered coding on the media data of the target service by using a layered coding technology, and obtains media flows corresponding to the target service: a basic layer bitstream, an enhancement layer 1 bitstream, and an enhancement layer 2 bitstream. The PCF network element generates QoS information of each media flow layer based on the layered coding information of the media flow: the coverage rate of the basic layer bitstream is 1, the coverage rate of the enhancement layer 1 bitstream is 0.7, and the coverage rate of the enhancement layer 2 bitstream is 0.4. The PCF network element sends the QoS information of each media flow layer to the access network device. The access network device configures, according to the QoS information of each media flow layer, a transmission parameter for a DRB that transmits each media flow, and uses the DRB to map and transmit a media data packet at the media flow layer. Refer to FIG. 14. FIG. 14 is a schematic diagram of still another scenario of a media data transmission method according to this application. An access network device transmits a media data packet of the target service in multicast manner based on QoS information (which may also be understood as a QoS parameter) of each media flow layer. The area 1 is a signal coverage area of the access network device. According to the QoS information of the basic layer bitstream (the coverage rate of the basic layer bitstream is 1), the area 1 is also an area in which the access network device transmits the basic layer bitstream. In other words, it may be understood that the terminal device may receive a basic layer bitstream of the target service when it is located in a range of the area 1. According to the QoS information of the enhancement layer 1 bitstream (the basic layer bitstream coverage rate is 0.7), an area in which the access network device transmits the enhancement layer 1 bitstream is an area 2, and because the area 1 covers a range of the area 2. Therefore, when the terminal device is in the range of the area 2, the terminal device can receive the enhancement layer 1 bitstream and the basic layer bitstream of the target service. According to the QoS information of the enhancement layer 2 bitstream (the basic layer bitstream coverage rate is 0.4), an area in which the access network device transmits the enhancement layer 2 bitstream is an area 3. Because both the area 1 and the area 2 cover a range of the area 3, in this case, it may be understood that the terminal device can receive an enhancement layer 2 bitstream, an enhancement layer 1 bitstream, and a basic layer bitstream of the target service within a range of the area 3.

By using the foregoing method, the PCF network element may generate the QoS information based on the layered coding information of each media flow, and then transmit the QoS information of each media flow to the access network device via the SMF network element, so that the access network device performs differentiated transmission based on the QoS information of each media flow. In this way, a transmission speed and a data throughput within signal coverage of the access network device are improved.

It should be noted that although a video service is used as an example in embodiments of this application, the video service is not limited to the video service. The data transmission method in this application may be applied to a data transmission scenario of various layered services, for example, a service such as voice, augmented reality (augmented reality, AR), a virtual reality technology (virtual reality, VR), or holographic communication.

The foregoing mainly describes the solutions provided in embodiments of this application from the perspective of device interaction. It may be understood that, to implement the foregoing functions, the access network device or the PCF network element may include a corresponding hardware structure and/or a software module for performing each function. A person skilled in the art should be easily aware that, in combination with units and algorithm steps of the examples described in embodiments disclosed in this specification, embodiments of this application may be implemented by hardware or a combination of hardware and computer software. Whether a function is performed by hardware or hardware driven by computer software depends on a particular application and a design constraint of the technical solutions. A person skilled in the art may use different methods to implement the described functions for each particular application, but it is not considered that the implementation goes beyond the scope of this application.

In embodiments of this application, the access network device or the PCF network element may be divided into functional units based on the foregoing method examples. For example, each functional unit may be obtained through division based on each corresponding function, or two or more functions may be integrated into one unit. The integrated unit may be implemented in a form of hardware, or may be implemented in a form of a software functional unit.

When an integrated unit is used, FIG. 15 is a schematic structural diagram of a communication apparatus 150 according to an embodiment of this application. The communication apparatus shown in FIG. 15 may be an access network device, an apparatus in an access network device, or an apparatus that can coordinate with an access network device. Alternatively, the communication apparatus 150 may be a PCF network element, or may be an apparatus in a PCF network element, or an apparatus that can coordinate with a PCF network element. As shown in FIG. 15, the communication apparatus includes a communication unit 1501 and a processing unit 1502. Specifically:

In an implementation, when the communication apparatus 1500 is an access network device, an apparatus in an access network device, or an apparatus that can coordinate with the access network device, the communication unit 1501 is configured to receive layered coding information of a media flow, where the media flow is a target service; a processing unit 1502, configured to determine a plurality of multicast groups based on layered coding information and information about terminal devices UEs that access a target service; and the communication unit 1501 is further configured to send the media data packet of the target service to the UE based on the plurality of multicast groups.

In a possible implementation, the layered coding information includes one or more of the following information: first indication information, a quantity of media flow layers in the media flow, a layer identifier of the media flow layer in the media flow, or a network requirement of the media flow layer in the media flow. The first indication information indicates that the media flow is a layered media flow.

In a possible implementation, the information about the UE includes one or more of the following information: a distance between the UE and the access network device, a channel status of the UE, or received signal strength of the UE.

In a possible implementation, the communication unit 1501 is further configured to receive second indication information from a session management function SMF network element, where the second indication information indicates the access network device to determine the plurality of multicast groups.

In a possible implementation, the communication unit 1501 is configured to receive third indication information from the SMF network element, and the third indication information indicates a correspondence between a media flow layer and a quality of service QoS flow; the communication unit 1501 is configured to send, to a multicast group to which the UE belongs, a media data packet in the QoS flow corresponding to a first media flow layer, and the first media flow layer is a media flow layer corresponding to a multicast group to which the UE belongs; or the third indication information indicates a correspondence between a media flow layer and a protocol data unit PDU session; the communication unit 1501 is configured to send, to a multicast group to which the UE belongs, a media data packet in a PDU session corresponding to a first media flow layer, and the first media flow layer is a media flow layer corresponding to a multicast group to which the UE belongs.

In a possible implementation, the processing unit 1502 is configured to determine one or more of the following information about a multicast group: a multicast group identifier, an identifier of a UE in the multicast group, a received signal strength range of a UE in the multicast group, a layer identifier of a media flow layer corresponding to the multicast group, a modulation and coding scheme MCS, a bandwidth, or a transmit power.

In a possible implementation, the communication unit 1501 is further configured to send, to the UE, the multicast group identifier of the multicast group to which the UE belongs; the communication unit 1501 sends, based on the layer identifier of the media flow layer corresponding to the multicast group to which the UE belongs, a media data packet corresponding to the layer identifier of the media flow layer to the UE; and a media data packet of the target service carries the layer identifier of the media flow layer corresponding to the multicast group.

In a possible implementation, the processing unit 1502 is configured to determine the multicast group identifier of each of the plurality of multicast groups and the received signal strength range of the UE in the multicast group; the communication unit 1501 is further configured to send a time value, a multicast group identifier, and a received signal strength range of the UE in the multicast group to the UE in a first multicast group, and the first multicast group is one of the plurality of multicast groups; a multicast group switching request is received from a target UE of the first multicast group, and the multicast group switching request carries a multicast group identifier of a second multicast group; and fourth indication information is sent to the target UE based on a received signal strength of the target UE and the received signal strength range of the UE in the multicast group, and the fourth indication information indicates the target UE to leave or join the second multicast group.

In a possible implementation, the processing unit 1502 is configured to determine the received signal strength range of the UE in each of the plurality of multicast groups. The processing unit 1502 is further configured to determine a target UE of a first multicast group based on a received signal strength and a time value of a first UE, and a received signal strength range of UE in the multicast group corresponding to the first UE, where the first UE is one of UEs that access the target service, a first duration of the target UE is greater than or equal to the time value, and the first duration is a duration in which a received signal strength is greater than a received signal strength range of a UE in a second multicast group; the access network device determines the second multicast group from the plurality of multicast groups based on the received signal strength of the target UE and the received signal strength range of the UE in each multicast group; the communication unit 1501 is further configured to send fourth indication information to the target UE, where the fourth indication information carries the multicast group identifier of the second multicast group, and the fourth indication information indicates the target UE to leave the second multicast group.

In a possible implementation, the processing unit 1502 is configured to determine a received signal strength range of a UE in each of the plurality of multicast groups. The processing unit 1502 is further configured to determine a target UE of a first multicast group based on a received signal strength and a time value of a first UE, and a received signal strength range of UE in the multicast group corresponding to the first UE, where the first UE is one of UEs that access the target service, a first duration of the target UE is greater than or equal to the time value, and the first duration is a duration in which a received signal strength reaches a received signal strength range of a UE in a second multicast group; the processing unit 1502 is further configured to determine the second multicast group from the plurality of multicast groups based on the received signal strength of the target UE and the received signal strength range of the UE in each multicast group; the communication unit 1501 is further configured to send fourth indication information to the target UE, where the fourth indication information carries the multicast group identifier of the second multicast group, and the fourth indication information indicates the target UE to join the second multicast group.

In a possible implementation, the communication unit 1501 is further configured to receive a time value from the SMF network element.

In a possible implementation, the determining a multicast group includes: an identifier of UE in a multicast group of the multicast group is determined. The communication unit 1501 is further configured to send an identifier of UE in a multicast group of each multicast group to the SMF network element.

In a possible implementation, the communication unit 1501 is further configured to send the quantity of multicast groups of the target service to the application service AS network element.

In another implementation, the communication apparatus 150 is a PCF network element, or may be an apparatus in a PCF network element, or an apparatus that can coordinate with a PCF network element.

A communication unit 1501 receives layered coding information of a media flow from an application function network element AF, where the media flow is a target service; the processing unit 1502 determines, based on the layered coding information, quality of service QoS information corresponding to the media flow layer. The communication unit 1501 sends the QoS information to a session management function SMF network element.

In a possible implementation, the layered coding information includes one or more of the following information: first indication information, a quantity of media flow layers, a layer identifier of each media flow layer, or a network requirement of each media flow layer. For example, the first indication information indicates that the media flow is a layered media flow.

In a possible implementation, the QoS information includes a tolerable packet loss rate and/or a coverage rate, and the QoS information reflects a network requirement corresponding to each media flow layer of the target service.

FIG. 16 is a communication apparatus 160 according to an embodiment of this application. The communication apparatus 160 is configured to implement functions of an access network device in the foregoing media data transmission method. The apparatus may be an access network device or an apparatus configured for an access network. The apparatus used in the access network device may be a chip system or a chip in the access network device. The chip system may include a chip, or may include a chip and another discrete component. Alternatively, the communication apparatus 160 shown in FIG. 16 is configured to implement a function of the PCF network element in the foregoing media data transmission method. The apparatus may be a PCF network element or an apparatus used in a core network. The apparatus used in the PCF network element may be a chip system or a chip in the PCF network element. The chip system may include a chip, or may include a chip and another discrete component.

The communication apparatus 160 includes at least one processor 1620, configured to implement a data processing function of the access network device or a data processing function of the PCF network element in the method provided in embodiments of this application. The communication apparatus 160 may further include a communication interface 1610, configured to implement a sending and receiving operation of the access network device or the PCF network element in the method provided in this embodiment of this application. In this embodiment of this application, the communication interface may be a transceiver, a circuit, a bus, a module, or another type of communication interface, and is configured to communicate with another device via a transmission medium. For example, the communication interface 1610 is used by an apparatus in the communication apparatus 160 to communicate with another device. The processor 1620 receives and sends data via the communication interface 1610, and is configured to implement the method in the foregoing method embodiment.

The communication apparatus 160 may further include at least one memory 1630, configured to store a program instruction and/or data. The memory 1630 is coupled to the processor 1620. Couplings in embodiments of this application are indirect couplings or communication connections between apparatuses, units, or modules, may be implemented in electronic, mechanical, or other forms, and are used for information exchange between the apparatuses, the units, and the modules. The processor 1620 may cooperate with the memory 1630. The processor 1620 may execute the program instructions stored in the memory 1630. At least one of the at least one memory may be included in the processor.

In this embodiment of this application, a specific connection medium between the communication interface 1610, the processor 1620, and the memory 1630 is not limited. In this embodiment of this application, the memory 1630, the processor 1620, and the communication interface 1610 are connected via a bus 1640 in FIG. 16. The bus is represented by using a bold line in FIG. 16. A manner of connection between other components is merely an example for description, and is not limited thereto. The bus may be classified into an address bus, a data bus, a control bus, and the like. For ease of representation, only one thick line is used in FIG. 16 for representation, but it does not indicate that there is only one bus or only one type of bus.

When the communication apparatus 160 is specifically an apparatus used for an access network device or a PCF network element, for example, when the communication apparatus 160 is specifically a chip or a chip system, output or received by the communication interface 1610 may be a baseband signal. When the communication apparatus 160 is specifically an access network device or a PCF network element, the communication interface 1610 may output or receive a radio frequency signal. In this embodiment of this application, the processor may be a general-purpose processor, a digital signal processor, an application-specific integrated circuit, a field programmable gate array or another programmable logic device, a discrete gate or a transistor logic device, or a discrete hardware component, and may implement or perform the methods, the steps, and logical block diagrams disclosed in this embodiment of this application. The general-purpose processor may be a microprocessor, any conventional processor, or the like. The steps in the methods disclosed with reference to embodiments of this application may be directly performed and completed by a hardware processor, or may be performed and completed by using a combination of hardware in the processor and a software module.

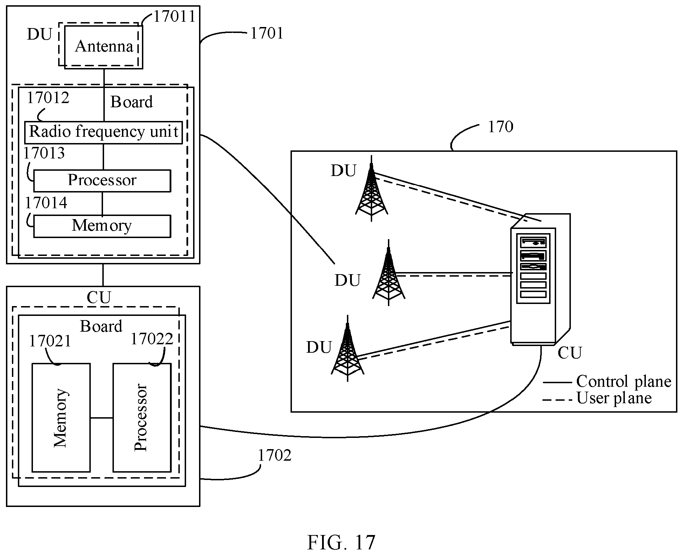

FIG. 17 is a schematic diagram of a structure of an access network device according to an embodiment of this application. The access network device (or a base station) may perform functions of the access network device in the foregoing method embodiments. The access network device 170 may include one or more DUs 1701 and one or more CUs 1702. The DU 1701 may include at least one antenna 17016, at least one radio frequency unit 17012, at least one processor 17013, and at least one memory 17014. The DU 1701 is mainly configured to: receive and send a radio frequency signal, convert a radio frequency signal and a baseband signal, and perform partial baseband processing. The CU 1702 may include at least one processor 17022 and at least one memory 17021.

The CU 1702 is mainly configured to: perform baseband processing, control the access network device, and the like. The DU 1701 and the CU 1702 may be physically disposed together, or may be physically disposed separately, namely, a distributed base station. The CU 1702 is a control center of the access network device, may also be referred to as a processing unit, and is mainly configured to complete a baseband processing function. For example, the CU 1702 may be configured to control the access network device to perform an operation procedure related to the access network device in the foregoing method embodiments.

In addition, optionally, the access network device 170 may include one or more radio frequency units, one or more DUs, and one or more CUs. The DU may include at least one processor 17013 and at least one memory 17014, the radio frequency unit may include at least one antenna 17016 and at least one radio frequency unit 17012, and the CU may include at least one processor 17022 and at least one memory 17021.

In an example, the CU 1702 may be formed by one or more boards. The multiple boards may jointly support a radio access network (such as a 5G network) with a single access indication, or may separately support radio access networks of different access standards (such as LTE, 5G, or other networks). The memory 17021 and the processor 17022 may serve one or more boards. In other words, a memory and a processor may be separately disposed on each board. Alternatively, a plurality of boards may share a same memory and a same processor. In addition, a necessary circuit may be further disposed on each board. The DU 1701 may be formed by one or more boards. The multiple boards may jointly support a radio access network (such as a 5G network) with a single access indication, or may separately support radio access networks of different access standards (such as LTE, 5G, or other networks). The memory 17014 and the processor 17013 may serve one or more boards. In other words, a memory and a processor may be separately disposed on each board. Alternatively, a plurality of boards may share a same memory and a same processor. In addition, a necessary circuit may be further disposed on each board.

The access network device shown in FIG. 17 can implement processes related to the access network device in the foregoing method embodiments, the CU shown in FIG. 17 can implement processes related to the CU in the foregoing method embodiments, and the DU shown in FIG. 17 can implement processes related to the DU in the foregoing method embodiments. Operations and/or functions of the modules in the access network device, the CU, or the DU shown in FIG. 17 are separately used to implement corresponding procedures in the foregoing method embodiments. For details, refer to the descriptions in the foregoing method embodiment. To avoid repetition, detailed descriptions are properly omitted herein.

An embodiment of this application further provides a computer-readable storage medium. The computer-readable storage medium stores computer-executable instructions. When the computer-executable instructions are executed, the method performed by the access network device in the foregoing method embodiments is implemented.

An embodiment of this application further provides a computer-readable storage medium. The computer-readable storage medium stores computer-executable instructions. When the computer-executable instructions are executed, the method performed by the PCF network element in the foregoing method embodiments is implemented.

An embodiment of this application further provides a computer program product. The computer program product includes a computer program. When the computer program is executed, the method performed by the access network device in the foregoing method embodiments is implemented.

An embodiment of this application further provides a computer program product. The computer program product includes a computer program. When the computer program is executed, the method performed by the PCF network element in the foregoing method embodiments is implemented.

It should be noted that, for brief description, the foregoing method embodiments are each represented as a combination of a series of actions. However, a person skilled in the art should know that this application is not limited to the described order of the actions, because according to this application, some steps may be performed in another order or simultaneously. It should be further known by a person skilled in the art that embodiments described in this specification are all preferred embodiments, and the related actions and modules are not necessarily required by this application.

For descriptions of embodiments provided in this application, reference may be made to each other, and the descriptions of embodiments have different emphasis. For a part that is not described in detail in an embodiment, refer to related descriptions in another embodiment. For ease and brevity of description, for example, for functions and performed steps of the apparatuses and devices provided in embodiments of this application, refer to related descriptions of the method embodiments of this application. The method embodiments and the apparatus embodiments may also be referenced, combined, or cited to each other.

## Claims

1. A media data transmission method, wherein the method comprises:
receiving (S1001), by an access network device, layered coding information of a media flow, wherein the media flow is a target service;
determining (S1002), by the access network device, a plurality of multicast groups based on the layered coding information and information about terminal devices UEs that access the target service, comprising: determining a multicast group identifier of each of the plurality of multicast groups and a received signal strength range of a User Equipment, UE, in each multicast group;
determining, by the access network device, one or more of the following information about each multicast group in the plurality of multicast groups: an identifier of a UE in the multicast group, a layer identifier of a media flow layer corresponding to the multicast group, a modulation and coding scheme MCS, a bandwidth, or transmit power;
sending (S1003), by the access network device, a time value, a first multicast group identifier, and a received signal strength range of a UE in the first multicast group to the UE in the first multicast group, wherein the first multicast group is one of the plurality of multicast groups;
receiving (S1004), by the access network device, a multicast group switching request from a target UE of the first multicast group, wherein the multicast group switching request carries a multicast group identifier of a second multicast group; and
sending (S1005), by the access network device, fourth indication information to the target UE based on a received signal strength of the target UE and the received signal strength range of the UE in the multicast group, wherein the fourth indication information indicates the target UE to leave or join the second multicast group;
sending (S1006), by the access network device, a media data packet of the target service to the UE based on the plurality of multicast groups
wherein the information about the UE comprises one or more of the following information: a distance between the UE and the access network device, a channel status of the UE, or a received signal strength of the UE.

2. The method according to claim 1, wherein the layered coding information comprises one or more of the following information: first indication information, a quantity of media flow layers in the media flow, a layer identifier of a media flow layer in the media flow, or a network requirement of a media flow layer in the media flow, wherein the first indication information indicates that the media flow is a layered media flow.

3. The method according to any one of claims 1 to 2, wherein the method further comprises:
receiving, by the access network device, second indication information from a session management function SMF network element, wherein the second indication information indicates the access network device to determine the plurality of multicast groups.

4. The method according to any one of claims 1 to 3, wherein the sending, by the access network device, a media data packet of the target service to the UE based on the plurality of multicast groups comprises:
receiving, by the access network device, third indication information from the SMF network element, wherein the third indication information indicates a correspondence between a media flow layer and a quality of service QoS flow; and
sending, by the access network device to the UE, a media data packet in a QoS flow corresponding to a first media flow layer, wherein the first media flow layer is a media flow layer corresponding to a multicast group to which the UE belongs;
or
receiving, by the access network device, third indication information from the SMF network element, wherein the third indication information indicates a correspondence between a media flow layer and a protocol data unit PDU session; and
sending, by the access network device to the UE, a media data packet in a PDU session corresponding to a first media flow layer, wherein the first media flow layer is a media flow layer corresponding to a multicast group to which the UE belongs.

5. The method according to claim 1, wherein the method further comprises:
sending, to the UE by the access network device, a multicast group identifier of the multicast group to which the UE belongs; and
sending, by the access network device based on a layer identifier of a media flow layer corresponding to the multicast group to which the UE belongs, a media data packet corresponding to the layer identifier of the media flow layer to the UE, wherein
the media data packet of the target service carries the layer identifier of the media flow layer corresponding to the multicast group.

6. The method according to claim 1 or 5, wherein the determining a plurality of multicast groups comprises: determining the received signal strength range of the UE in each of the plurality of multicast groups; and
the method further comprises:
determining (S1203), by the access network device, a target UE of a first multicast group based on a received signal strength and a time value of a first UE, and a received signal strength range of a UE in a multicast group corresponding to the first UE, wherein the first UE is one of the UEs that access the target service, first duration of the target UE is greater than or equal to the time value, and the first duration is duration in which the received signal strength is greater than a received signal strength range of a UE in a second multicast group;
determining (S1204), by the access network device, the second multicast group from the plurality of multicast groups based on the received signal strength of the target UE and the received signal strength range of the UE in each the multicast groups; and
sending (S 1205), by the access network device, fourth indication information to the target UE, wherein the fourth indication information carries a multicast group identifier of the second multicast group, and the fourth indication information indicates the target UE to leave the second multicast group.

7. The method according to claim 1 or 5, wherein the determining a plurality of multicast groups comprises: determining the received signal strength range of the UE in each of the plurality of multicast groups; and
the method further comprises:
determining (S1203), by the access network device, a target UE of a first multicast group based on a received signal strength and a time value of a first UE, and a received signal strength range of a UE in a multicast group corresponding to the first UE, wherein the first UE is one of the UEs that access the target service, first duration of the target UE is greater than or equal to the time value, and the first duration is duration in which the received signal strength reaches a received signal strength range of a UE in a second multicast group;
determining (S1204), by the access network device, the second multicast group from the plurality of multicast groups based on the received signal strength of the target UE and the received signal strength range of the UE in each the multicast groups; and
sending (S 1205), by the access network device, fourth indication information to the target UE, wherein the fourth indication information carries a multicast group identifier of the second multicast group, and the fourth indication information indicates the target UE to join the second multicast group.

8. A communication apparatus, comprising a processor and a memory, wherein the processor is coupled to the memory, and the processor is configured to implement the method according to any one of claims 1 to 7.

9. A computer-readable storage medium, wherein the storage medium stores a computer program or instructions; and when the computer program or the instructions are executed by a communication apparatus, the method according to any one of claims 1 to 7 is implemented.

## Patentansprüche

1. Mediendatenübertragungsverfahren, wobei das Verfahren Folgendes umfasst:
Empfangen (S1001), durch ein Zugriffsnetzwerkgerät, von Informationen zu der geschichteten Codierung eines Medienstroms, wobei der Medienstrom ein Zieldienst ist;
Bestimmen (S1002), durch das Zugriffsnetzwerkgerät, einer Vielzahl von Gruppenrufgruppen basierend auf den Informationen zu der geschichteten Codierung und Informationen über Endgeräte, UEs, die auf den Zieldienst zugreifen, umfassend: Bestimmen einer Gruppenrufgruppenkennung von jeder der Vielzahl von Gruppenrufgruppen und eines empfangenen Signalstärkebereichs einer Benutzerausrüstung, UE, in jeder Gruppenrufgruppe;
Bestimmen, durch das Zugangsnetzwerkgerät, einer oder mehrerer der folgenden Informationen über jede Gruppenrufgruppe in der Vielzahl von Gruppenrufgruppen: einer Kennung einer UE in der Gruppenrufgruppe, einer Schichtkennung einer Medienstromschicht, die der Gruppenrufgruppe entspricht, eines Modulations- und Codierungsschemas, MCS, einer Bandbreite oder einer Übertragungsleistung;
Senden (S1003), durch das Zugangsnetzwerkgerät, eines Zeitwerts, einer ersten Gruppenrufgruppenkennung und eines empfangenen Signalstärkebereichs einer UE in der ersten Gruppenrufgruppe an die UE in der ersten Gruppenrufgruppe, wobei die erste Gruppenrufgruppe eine der Vielzahl von Gruppenrufgruppen ist;
Empfangen (S1004), durch das Zugangsnetzwerkgerät, einer Gruppenrufgruppen-Umschaltanforderung von einem Ziel-UE der ersten Gruppenrufgruppe, wobei die Gruppenrufgruppen-Umschaltanforderung eine Gruppenrufgruppenkennung einer zweiten Gruppenrufgruppe enthält; und
Senden (S1005), durch das Zugangsnetzwerkgerät, vierter Anzeigeinformationen an die Ziel-UE basierend auf einer empfangenen Signalstärke der Ziel-UE und dem empfangenen Signalstärkebereich der UE in der Gruppenrufgruppe, wobei die vierten Anzeigeinformationen der Ziel-UE anzeigen, die zweite Gruppenrufgruppe zu verlassen oder ihr beizutreten;
Senden (S1006), durch das Zugangsnetzwerkgerät, eines Mediendatenpakets des Zieldienstes an die UE basierend auf der Vielzahl von Gruppenrufgruppen
wobei die Informationen über die UE eine oder mehrere der folgenden Informationen umfassen: einen Abstand zwischen der UE und dem Zugangsnetzwerkgerät, einen Kanalstatus der UE oder eine empfangene Signalstärke der UE.

2. Verfahren nach Anspruch 1, wobei die Informationen zu der geschichteten Codierung eine oder mehrere der folgenden Informationen umfassen: erste Anzeigeinformationen, eine Anzahl von Medienstromschichten in dem Medienstrom, eine Schichtkennung einer Medienstromschicht in dem Medienstrom oder eine Netzwerkanforderung einer Medienstromschicht in dem Medienstrom, wobei die ersten Anzeigeinformationen anzeigen, dass es sich bei dem Medienstrom um einen geschichteten Medienstrom handelt.

3. Verfahren nach einem der Ansprüche 1 bis 2, wobei das Verfahren ferner Folgendes umfasst:
Empfangen, durch das Zugangsnetzwerkgerät, zweiter Anzeigeinformationen von einem Sitzungsverwaltungsfunktions-Netzwerkelement, SMF-Netzwerkelement, wobei die zweiten Anzeigeinformationen dem Zugangsnetzwerkgerät anzeigen, die Vielzahl von Gruppenrufgruppen zu bestimmen.

4. Verfahren nach einem der Ansprüche 1 bis 3, wobei das Senden, durch das Zugangsnetzwerkgerät, eines Mediendatenpakets des Zieldienstes an die UE basierend auf der Vielzahl von Gruppenrufgruppen Folgendes umfasst:
Empfangen, durch das Zugangsnetzwerkgerät, dritter Anzeigeinformationen von dem SMF-Netzwerkelement, wobei die dritten Anzeigeinformationen eine Entsprechung zwischen einer Medienstromschicht und einem Dienstqualitätsstrom, QoS-Strom, anzeigen; und
Senden, durch das Zugangsnetzwerkgerät an die UE, eines Mediendatenpakets in einem QoS-Strom, der einer ersten Medienstromschicht entspricht, wobei die erste Medienstromschicht eine Medienstromschicht ist, die einer Gruppenrufgruppe entspricht, zu der die UE gehört;
oder
Empfangen, durch das Zugangsnetzwerkgerät, dritter Anzeigeinformationen von dem SMF-Netzwerkelement, wobei die dritten Anzeigeinformationen eine Entsprechung zwischen einer Medienstromschicht und einer Protokolldateneinheitssitzung, PDU-Sitzung, anzeigen; und
Senden, durch das Zugangsnetzwerkgerät an die UE, eines Mediendatenpakets in einer PDU-Sitzung, die einer ersten Medienstromschicht entspricht, wobei die erste Medienstromschicht eine Medienstromschicht ist, die einer Gruppenrufgruppe entspricht, zu der die UE gehört.

5. Verfahren nach Anspruch 1, wobei das Verfahren ferner Folgendes umfasst:
Senden, an die UE durch das Zugangsnetzwerkgerät, einer Gruppenrufgruppenkennung der Gruppenrufgruppe, zu der die UE gehört; und
Senden, durch das Zugangsnetzwerkgerät basierend auf einer Schichtkennung einer Medienstromschicht, die der Gruppenrufgruppe entspricht, zu der die UE gehört, eines Mediendatenpakets, das der Schichtkennung der Medienstromschicht entspricht, an die UE, wobei
das Mediendatenpaket des Zieldienstes die Schichtkennung der Medienstromschicht, die der Gruppenrufgruppe entspricht, enthält.

6. Verfahren nach Anspruch 1 oder 5, wobei das Bestimmen einer Vielzahl von Gruppenrufgruppen Folgendes umfasst: Bestimmen des empfangenen Signalstärkebereichs der UE in jeder der Vielzahl von Gruppenrufgruppen; und
wobei das Verfahren ferner Folgendes umfasst:
Bestimmen (S1203), durch das Zugangsnetzwerkgerät, einer Ziel-UE einer ersten Gruppenrufgruppe basierend auf einer empfangenen Signalstärke und einem Zeitwert einer ersten UE und einem empfangenen Signalstärkebereich einer UE in einer Gruppenrufgruppe, die der ersten UE entspricht, wobei die erste UE eine der UEs ist, die auf den Zieldienst zugreifen, die erste Dauer der Ziel-UE größer als oder gleich dem Zeitwert ist und die erste Dauer eine Dauer ist, in der die empfangene Signalstärke größer als ein empfangener Signalstärkebereich einer UE in einer zweiten Gruppenrufgruppe ist;
Bestimmen (S1204), durch das Zugangsnetzwerkgerät, der zweiten Gruppenrufgruppe aus der Vielzahl von Gruppenrufgruppen basierend auf der empfangenen Signalstärke der Ziel-UE und dem empfangenen Signalstärkebereich der UE in jeder der Gruppenrufgruppen; und
Senden (S1205), durch das Zugangsnetzwerkgerät, vierter Anzeigeinformationen an die Ziel-UE, wobei die vierten Anzeigeinformationen eine Gruppenrufgruppenkennung der zweiten Gruppenrufgruppe enthalten und die vierten Anzeigeinformationen der Ziel-UE anzeigen, die zweite Gruppenrufgruppe zu verlassen.

7. Verfahren nach Anspruch 1 oder 5, wobei das Bestimmen einer Vielzahl von Gruppenrufgruppen Folgendes umfasst: Bestimmen des empfangenen Signalstärkebereichs der UE in jeder der Vielzahl von Gruppenrufgruppen; und
wobei das Verfahren ferner Folgendes umfasst:
Bestimmen (S1203), durch das Zugangsnetzwerkgerät, einer Ziel-UE einer ersten Gruppenrufgruppe basierend auf einer empfangenen Signalstärke und einem Zeitwert einer ersten UE und einem empfangenen Signalstärkebereich einer UE in einer Gruppenrufgruppe, die der ersten UE entspricht, wobei die erste UE eine der UEs ist, die auf den Zieldienst zugreifen, die erste Dauer der Ziel-UE größer als oder gleich dem Zeitwert ist und die erste Dauer eine Dauer ist, in der die empfangene Signalstärke einen empfangenen Signalstärkebereich einer UE in einer zweiten Gruppenrufgruppe erreicht;
Bestimmen (S1204), durch das Zugangsnetzwerkgerät, der zweiten Gruppenrufgruppe aus der Vielzahl von Gruppenrufgruppen basierend auf der empfangenen Signalstärke der Ziel-UE und dem empfangenen Signalstärkebereich der UE in jeder der Gruppenrufgruppen; und
Senden (S1205), durch das Zugangsnetzwerkgerät, vierter Anzeigeinformationen an die Ziel-UE, wobei die vierten Anzeigeinformationen eine Gruppenrufgruppenkennung der zweiten Gruppenrufgruppe enthalten und die vierten Anzeigeinformationen der Ziel-UE anzeigen, der zweiten Gruppenrufgruppe beizutreten.

8. Kommunikationsvorrichtung, umfassend einen Prozessor und einen Speicher, wobei der Prozessor an den Speicher gekoppelt ist und der Prozessor dazu konfiguriert ist, das Verfahren nach einem der Ansprüche 1 bis 7 umzusetzen.

9. Computerlesbares Speichermedium, wobei das Speichermedium ein Computerprogramm oder Anweisungen speichert; und, wenn das Computerprogramm oder die Anweisungen durch eine Kommunikationsvorrichtung ausgeführt werden, das Verfahren nach einem der Ansprüche 1 bis 7 umgesetzt wird.

## Revendications

1. Procédé de transmission de données multimédia, dans lequel le procédé comprend :
la réception (S1001), par un dispositif de réseau d'accès, d'informations de codage en couches d'un flux multimédia, dans lequel le flux multimédia est un service cible ;
la détermination (S1002), par le dispositif de réseau d'accès, d'une pluralité de groupes de multidiffusion sur la base des informations de codage en couches et des informations sur des UE de dispositifs terminaux qui accèdent au service cible, comprenant : la détermination d'un identifiant de groupe de multidiffusion de chacun de la pluralité de groupes de multidiffusion et d'une plage d'intensité de signal reçu d'un équipement utilisateur, UE, dans chaque groupe de multidiffusion ;
la détermination, par le dispositif de réseau d'accès, d'une ou plusieurs des informations suivantes sur chaque groupe de multidiffusion dans la pluralité de groupes de multidiffusion :
un identifiant d'un UE dans le groupe de multidiffusion, un identifiant de couche d'une couche de flux multimédia correspondant au groupe de multidiffusion, un schéma de modulation et de codage MCS, une bande passante, ou une intensité de transmission ;
l'envoi (S1003), par le dispositif de réseau d'accès, d'une valeur temporelle, d'un premier identifiant de groupe de multidiffusion, et d'une plage d'intensité de signal reçu d'un UE dans le premier groupe de multidiffusion à l'UE dans le premier groupe de multidiffusion, dans lequel le premier groupe de multidiffusion est l'un de la pluralité de groupes de multidiffusion ;
la réception (S1004), par le dispositif de réseau d'accès, d'une demande de commutation de groupe de multidiffusion provenant d'un UE cible du premier groupe de multidiffusion, dans lequel la demande de commutation de groupe de multidiffusion transporte un identifiant de groupe de multidiffusion d'un second groupe de multidiffusion ; et
l'envoi (S1005), par le dispositif de réseau d'accès, de quatrièmes informations d'indication à l'UE cible sur la base d'une intensité de signal reçu de l'UE cible et de la plage d'intensité de signal reçu de l'UE dans le groupe de multidiffusion, dans lequel les quatrièmes informations d'indication indiquent à l'UE cible de quitter ou de rejoindre le second groupe de multidiffusion ;
l'envoi (S1006), par le dispositif de réseau d'accès, d'un paquet de données multimédia du service cible à l'UE sur la base de la pluralité de groupes de multidiffusion
dans lequel les informations sur l'UE comprennent une ou plusieurs des informations suivantes : une distance entre l'UE et le dispositif de réseau d'accès, un état de canal de l'UE, ou une intensité de signal reçu de l'UE.

2. Procédé selon la revendication 1, dans lequel les informations de codage en couches comprennent l'une ou plusieurs des informations suivantes : de premières informations d'indication, une quantité de couches de flux multimédia dans le flux multimédia, un identifiant de couche d'une couche de flux multimédia dans le flux multimédia, ou une exigence de réseau d'une couche de flux multimédia dans le flux multimédia, dans lequel les premières informations d'indication indiquent que le flux multimédia est un flux multimédia en couches.

3. Procédé selon l'une quelconque des revendications 1 et 2, dans lequel le procédé comprend également :
la réception, par le dispositif de réseau d'accès, de secondes informations d'indication provenant d'un élément de réseau de fonction de gestion de session, SMF, dans lequel les secondes informations d'indication indiquent au dispositif de réseau d'accès de déterminer la pluralité de groupes de multidiffusion.

4. Procédé selon l'une quelconque des revendications 1 à 3, dans lequel l'envoi, par le dispositif de réseau d'accès, d'un paquet de données multimédia du service cible à l'UE sur la base de la pluralité de groupes de multidiffusion comprend :
la réception, par le dispositif de réseau d'accès, de troisièmes informations d'indication provenant de l'élément de réseau SMF, dans lequel les troisièmes informations d'indication indiquent une correspondance entre une couche de flux multimédia et un flux de qualité de service, QoS ; et
l'envoi, par le dispositif de réseau d'accès à l'UE, d'un paquet de données multimédia dans un flux QoS correspondant à une première couche de flux multimédia, dans lequel la première couche de flux multimédia est une couche de flux multimédia correspondant à un groupe de multidiffusion auquel appartient l'UE ;
ou
la réception, par le dispositif de réseau d'accès, de troisièmes informations d'indication provenant de l'élément de réseau SMF, dans lequel les troisièmes informations d'indication indiquent une correspondance entre une couche de flux multimédia et une session d'unité de données de protocole, PDU ; et
l'envoi, par le dispositif de réseau d'accès à l'UE, d'un paquet de données multimédia dans une session PDU correspondant à une première couche de flux multimédia, dans lequel la première couche de flux multimédia est une couche de flux multimédia correspondant à un groupe de multidiffusion auquel appartient l'UE.

5. Procédé selon la revendication 1, dans lequel le procédé comprend également :
l'envoi, à l'UE par le dispositif de réseau d'accès, d'un identifiant de groupe de multidiffusion du groupe de multidiffusion auquel appartient l'UE ; et
l'envoi, par le dispositif de réseau d'accès sur la base d'un identifiant de couche d'une couche de flux multimédia correspondant au groupe de multidiffusion auquel appartient l'UE, d'un paquet de données multimédia correspondant à l'identifiant de couche de la couche de flux multimédia à l'UE, dans lequel
le paquet de données multimédia du service cible transporte l'identifiant de couche de la couche de flux multimédia correspondant au groupe de multidiffusion.

6. Procédé selon la revendication 1 ou 5, dans lequel la détermination d'une pluralité de groupes de multidiffusion comprend : la détermination de la plage d'intensité de signal reçu de l'UE dans chacun de la pluralité de groupes de multidiffusion ; et
le procédé comprend également :
la détermination (S1203), par le dispositif de réseau d'accès, d'un UE cible d'un premier groupe de multidiffusion sur la base d'une intensité de signal reçu et d'une valeur temporelle d'un premier UE, et d'une plage d'intensité de signal reçu d'un UE dans un groupe de multidiffusion correspondant au premier UE, dans lequel le premier UE est l'un des UE qui accèdent au service cible, la première durée de l'UE cible est supérieure ou égale à la valeur temporelle, et la première durée est la durée pendant laquelle l'intensité de signal reçu est supérieure à une plage d'intensité de signal reçu d'un UE dans un second groupe de multidiffusion ;
la détermination (S1204), par le dispositif de réseau d'accès, du second groupe de multidiffusion parmi la pluralité de groupes de multidiffusion sur la base de l'intensité de signal reçu de l'UE cible et de la plage d'intensité de signal reçu de l'UE dans chacun des groupes de multidiffusion ; et
l'envoi (S1205), par le dispositif de réseau d'accès, de quatrièmes informations d'indication à l'UE cible, dans lequel les quatrièmes informations d'indication transportent un identifiant de groupe de multidiffusion du second groupe de multidiffusion, et les quatrièmes informations d'indication indiquent à l'UE cible de quitter le second groupe de multidiffusion.

7. Procédé selon la revendication 1 ou 5, dans lequel la détermination d'une pluralité de groupes de multidiffusion comprend : la détermination de la plage d'intensité de signal reçu de l'UE dans chacun de la pluralité de groupes de multidiffusion ; et
le procédé comprend également :
la détermination (S1203), par le dispositif de réseau d'accès, d'un UE cible d'un premier groupe de multidiffusion sur la base d'une intensité de signal reçu et d'une valeur temporelle d'un premier UE, et d'une plage d'intensité de signal reçu d'un UE dans un groupe de multidiffusion correspondant au premier UE, dans lequel le premier UE est l'un des UE qui accèdent au service cible, la première durée de l'UE cible est supérieure ou égale à la valeur temporelle, et la première durée est la durée pendant laquelle l'intensité de signal reçu atteint une plage d'intensité de signal reçu d'un UE dans un second groupe de multidiffusion ;
la détermination (S1204), par le dispositif de réseau d'accès, du second groupe de multidiffusion parmi la pluralité de groupes de multidiffusion sur la base de l'intensité de signal reçu de l'UE cible et de la plage d'intensité de signal reçu de l'UE dans chacun des groupes de multidiffusion ; et
l'envoi (S1205), par le dispositif de réseau d'accès, de quatrièmes informations d'indication à l'UE cible, dans lequel les quatrièmes informations d'indication transportent un identifiant de groupe de multidiffusion du second groupe de multidiffusion, et les quatrièmes informations d'indication indiquent à l'UE cible de rejoindre le second groupe de multidiffusion.

8. Appareil de communication, comprenant un processeur et une mémoire, dans lequel le processeur est couplé à la mémoire, et le processeur est configuré pour mettre en œuvre le procédé selon l'une quelconque des revendications 1 à 7.

9. Support de stockage lisible par ordinateur, dans lequel le support de stockage stocke un programme informatique ou des instructions ; et lorsque le programme informatique ou les instructions sont exécutés par un appareil de communication, le procédé selon l'une quelconque des revendications 1 à 7 est mis en œuvre.
